# EUROPEAN PATENT APPLICATION

(11) **EP 4 390 868 A1**
(43) Date of publication of application: **26.06.2024**
(21) Application number: 23202359.8
(22) Date of filing: 09.10.2023
(51) Int. Cl.: G06V 10/82, G06V 20/52, G08B 13/196

(54) **ALERT GENERATION PROGRAM, ALERT GENERATION METHOD, AND INFORMATION PROCESSING APPARATUS**

(30) Priority: 23.12.2022 JP 2022207690
(71) Applicant: Fujitsu Limited, Kawasaki-shi, Kanagawa 211-8588 (JP)
(72) Inventor: Obinata, Yuya, Kawasaki-shi, Kanagawa, 211-8588 (JP); Yamamoto, Takuma, Kawasaki-shi, Kanagawa, 211-8588 (JP); Uchida, Daisuke, Kawasaki-shi, Kanagawa, 211-8588 (JP)
(74) Representative: Hoffmann Eitle

(57) **Abstract**

An alert generation program that causes a computer to execute a process, the process includes acquiring a video of a person who holds a merchandise to be registered in a checkout machine; specifying merchandise candidates corresponding to merchandises included in the video and a number of the merchandise candidates by inputting the acquired video to a machine learning model; acquiring items of merchandises registered by the person and a number of the items of the merchandises; and generating an alert indicating an abnormality of merchandises registered in the checkout machine based on the acquired items of the merchandises and the number of the items of the merchandises, and the specified merchandise candidates and the number of the merchandise candidates.

## Description

### FIELD

The embodiments discussed herein are related to an alert generation program and the like.

### BACKGROUND

An image recognition technique for recognizing a specific object from an image is widely used. In this technique, for example, a region of the specific object in the image is specified as a bounding box (Bbox). There is another technique for image recognition of the object is performed by using machine learning. For example, it is considered that such an image recognition technique is applied to monitoring of a purchase operation of a customer in a store and work management of a worker in a factory.

Self-checkout is widely used in a store such as a supermarket or a convenience store. The self-checkout is a point of sale (POS) checkout system in which a user himself or herself who purchases a merchandise performs from reading of a barcode of the merchandise to settlement. For example, the self-checkout is introduced, and thus, a shortage of manpower due to a decrease in population and suppression of labor costs may be implemented.

Japanese Laid-open Patent Publication No. 2019-29021 is disclosed as related art.

### [TECHNICAL PROBLEM]

However, since a positional relationship between Bboxes extracted from a video is based on a two dimensional space, for example, a depth between the Bboxes may not be analyzed, and a relationship between a person and an object is difficult to be identified.

In the above-described self-checkout, since scanning and settlement of a merchandise code are entrusted to the user himself or herself, there is an aspect in which it is difficult to suppress an unauthorized activity of performing checkout registration of a smaller number of manual inputs or scans than an actual number of purchases for one type of purchased merchandise.

According to one aspect, an object of the present disclosure is to provide an alert generation program, an alert generation method, and an information processing apparatus that may suppress an unauthorized activity of cheating the number of purchases in a self-checkout.

### [ADVANTAGEOUS EFFECTS OF INVENTION]

According to one embodiment, the unauthorized activity of cheating the number of purchases in the self-checkout may be suppressed.

### SUMMARY

According to an aspect of the embodiments, an alert generation program that causes a computer to execute a process, the process includes acquiring a video of a person who holds a merchandise to be registered in a checkout machine; specifying merchandise candidates corresponding to merchandises included in the video and a number of the merchandise candidates by inputting the acquired video to a machine learning model; acquiring items of merchandises registered by the person and a number of the items of the merchandises; and generating an alert indicating an abnormality of merchandises registered in the checkout machine based on the acquired items of the merchandises and the number of the items of the merchandises, and the specified merchandise candidates and the number of the merchandise candidates.

### BRIEF DESCRIPTION OF DRAWINGS

FIG. 1 is a diagram illustrating an overall configuration example of a self-checkout system according to Embodiment 1;
FIG. 2 is a functional block diagram illustrating a functional configuration of an information processing apparatus according to Embodiment 1;
FIG. 3 is a diagram for describing an example of training data of a first machine learning model;
FIG. 4 is a diagram for describing machine learning of the first machine learning model;
FIG. 5 is a diagram for describing machine learning of a second machine learning model;
FIG. 6 is a diagram illustrating an example of a merchandise list;
FIG. 7 is a diagram illustrating an example of a template;
FIG. 8 is a diagram (1) for describing generation of hierarchical structure data;
FIG. 9 is a diagram (2) for describing the generation of the hierarchical structure data;
FIG. 10 is a diagram illustrating an example of a hierarchical structure;
FIG. 11 is a diagram (1) for describing generation of a hand-held merchandise image;
FIG. 12 is a diagram (2) for describing the generation of the hand-held merchandise image;
FIG. 13 is a diagram (1) illustrating a display example of a self-checkout;
FIG. 14 is a diagram (2) illustrating the display example of the self-checkout;
FIG. 15 is a diagram (3) for describing generation of a hand-held merchandise image;
FIG. 16 is a diagram (4) for describing the generation of the hand-held merchandise image;
FIG. 17 is a schematic diagram (1) illustrating a case 1 of specifying a merchandise item;
FIG. 18 is a schematic diagram (2) illustrating the case 1 of specifying the merchandise item;
FIG. 19 is a schematic diagram (3) illustrating the case 1 of specifying the merchandise item;
FIG. 20 is a schematic diagram (1) illustrating a case 2 of specifying the merchandise item;
FIG. 21 is a schematic diagram (2) illustrating the case 2 of specifying the merchandise item;
FIG. 22 is a diagram (1) illustrating a display example of an alert;
FIG. 23 is a diagram (2) illustrating the display example of the alert;
FIG. 24 is a diagram (3) illustrating the display example of the alert;
FIG. 25 is a diagram (4) illustrating the display example of the alert;
FIG. 26 is a flowchart illustrating a flow of data generation processing according to Embodiment 1;
FIG. 27 is a flowchart illustrating a flow of video acquisition processing according to Embodiment 1;
FIG. 28 is a flowchart illustrating a flow of first detection processing according to Embodiment 1;
FIG. 29 is a flowchart illustrating a flow of second detection processing according to Embodiment 1;
FIG. 30 is a flowchart illustrating a flow of specification processing according to Embodiment 1;
FIG. 31 is a diagram illustrating Application Example 1 of the hierarchical structure;
FIG. 32 is a schematic diagram (1) illustrating a case 3 of specifying the merchandise item;
FIG. 33 is a schematic diagram (2) illustrating the case 3 of specifying the merchandise item;
FIG. 34 is a schematic diagram (3) illustrating the case 3 of specifying the merchandise item;
FIG. 35 is a diagram (5) illustrating the display example of the alert;
FIG. 36 is a diagram (6) illustrating the display example of the alert;
FIG. 37 is a flowchart illustrating a flow of first detection processing according to Application Example 1;
FIG. 38 is a diagram illustrating Application Example 2 of the hierarchical structure;
FIG. 39 is a diagram (3) illustrating the display example of the self-checkout;
FIG. 40 is a schematic diagram (1) illustrating a case 4 of specifying the merchandise item;
FIG. 41 is a schematic diagram (2) illustrating the case 4 of specifying the merchandise item;
FIG. 42 is a schematic diagram (3) illustrating the case 4 of specifying the merchandise item;
FIG. 43 is a diagram (7) illustrating the display example of the alert;
FIG. 44 is a diagram (8) illustrating the display example of the alert;
FIG. 45 is a flowchart illustrating a flow of second detection processing according to Application Example 2;
FIG. 46 is a diagram illustrating Application Example 3 of the hierarchical structure;
FIG. 47 is a diagram illustrating Application Example 4 of the hierarchical structure;
FIG. 48 is a diagram for describing a hardware configuration example of the information processing apparatus; and
FIG. 49 is a diagram for describing a hardware configuration example of the self-checkout.

### DESCRIPTION OF EMBODIMENTS

Hereinafter, embodiments of an alert generation program, an alert generation method, and an information processing apparatus disclosed in the present application will be described in detail based on the drawings. The disclosure is not limited by the embodiments. The embodiments may be appropriately combined as long as there is no contradiction.

### [Embodiment 1]

### <Overall configuration>

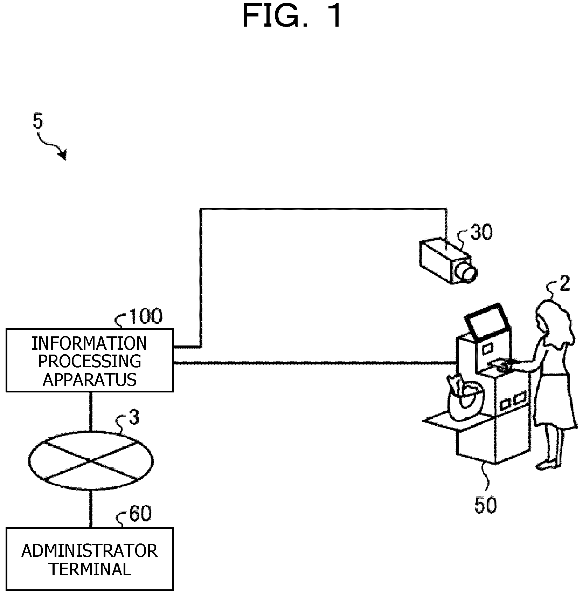

FIG. 1 is a diagram illustrating an overall configuration example of a self-checkout system 5 according to Embodiment 1. As illustrated in FIG. 1, the self-checkout system 5 includes a camera 30, a self-checkout 50, an administrator terminal 60, and an information processing apparatus 100.

The information processing apparatus 100 is an example of a computer coupled to the camera 30 and the self-checkout 50. The information processing apparatus 100 is coupled to the administrator terminal 60 via a network 3. The network 3 may be various communication networks regardless of a wired or wireless manner. The camera 30 and the self-checkout 50 may be coupled to the information processing apparatus 100 via the network 3.

The camera 30 is an example of an imaging device that captures a video of a region including the self-checkout 50. The camera 30 transmits data on the video to the information processing apparatus 100. In the following description, the data on the video is referred to as "video data" in some cases.

The video data includes a plurality of time-series image frames. Frame numbers are assigned to the image frames in ascending chronological order. One image frame is image data of a still image captured by the camera 30 at a certain timing.

The self-checkout 50 is an example of a checkout machine in which a user 2 himself or herself who purchases merchandises performs checkout registration and settlement (payment) of the merchandises to be purchased, and is referred to as "self-checkout", "automated checkout", "self-checkout machine", "self-check-out register", or the like. For example, when the user 2 moves the merchandise to be purchased to a scan region of the self-checkout 50, a code printed on or attached to the merchandise is scanned to register the merchandise to be purchased in the self-checkout 50. Hereinafter, the registration of the merchandise in the self-checkout 50 is referred to as "checkout registration" in some cases. Here, the "code" referred to herein may be a barcode corresponding to a standard such as Japanese Article Number (JAN), Universal merchandise Code (UPC), or European Article Number (EAN), or may be another two-dimensional code or the like.

After the user 2 repeatedly executes an operation of the above-described checkout registration and completes the scanning of the merchandises, the user 2 operates a touch panel or the like of the self-checkout 50 to make a settlement request. Upon accepting the settlement request, the self-checkout 50 presents the number of merchandises to be purchased, a purchase amount, and the like, and executes settlement processing. The self-checkout 50 registers, in a storage unit, information on the merchandises scanned in a period from when the user 2 starts scanning to when the user 2 makes the settlement request, and transmits the registered information as self-checkout data (merchandise information) to the information processing apparatus 100.

The administrator terminal 60 is an example of a terminal device used by an administrator of a store. For example, the administrator terminal 60 may be a mobile terminal device carried by the administrator of the store. The administrator terminal 60 may be a desktop-type or laptop-type personal computer. In this case, the administrator terminal 60 may be disposed in the store, for example, in a backyard or the like, or may be disposed in an office or the like outside the store. According to one aspect, the administrator terminal 60 accepts various notifications from the information processing apparatus 100. Although the terminal device used by the administrator of the store has been described as an example, the terminal device may be used by all persons related to the store.

According to such a configuration, the information processing apparatus 100 acquires a video of a person who holds a merchandise to be registered in the self-checkout 50. The acquired video is input to a machine learning model (zero-shot image classifier), and thus, the information processing apparatus 100 specifies merchandise candidates corresponding to the merchandise included in the video and the number of merchandise candidates from among a plurality of preset merchandise candidates (texts). Thereafter, the information processing apparatus 100 acquires items of merchandises input by the person and the number of items of merchandises from among a plurality of merchandise candidates output by the self-checkout 50. The information processing apparatus 100 generates an alert indicating an abnormality of the merchandise registered in the self-checkout 50 based on the acquired items of the merchandises and the acquired number of items of the merchandises, and the specified merchandise candidates and the specified number of merchandise candidates.

As a result, since the information processing apparatus 100 may output an alert at the time of unauthorized activity detection in which a smaller number of manual inputs or scans for checkout registration than an actual number of purchases of merchandises for one type of purchased merchandise are performed in the self-checkout 50, an unauthorized activity of cheating the number of purchases in the self-checkout 50 may be suppressed.

### <2. Functional configuration>

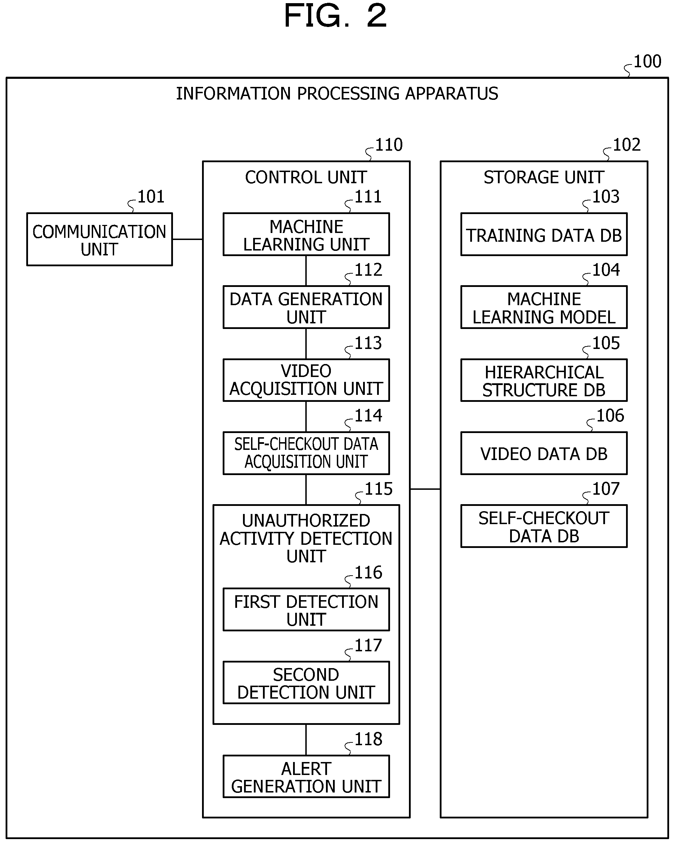

FIG. 2 is a functional block diagram illustrating a functional configuration of the information processing apparatus 100 according to Embodiment 1. As illustrated in FIG. 2, the information processing apparatus 100 includes a communication unit 101, a storage unit 102, and a control unit 110.

### <2-1. Communication unit>

The communication unit 101 is a processing unit that controls communication with other apparatuses, and is implemented by, for example, a communication interface or the like. For example, the communication unit 101 receives the video data from the camera 30, and transmits a processing result by the control unit 110 to the administrator terminal 60.

### <2-2. Storage unit>

The storage unit 102 is a processing unit that stores various kinds of data, a program executed by the control unit 110, and the like, and is implemented by a memory, a hard disk, or the like. The storage unit 102 stores a training data DB 103, a machine learning model 104, a hierarchical structure DB 105, a video data DB 106, and a self-checkout data DB 107.

### <2-2-1. Training data DB>

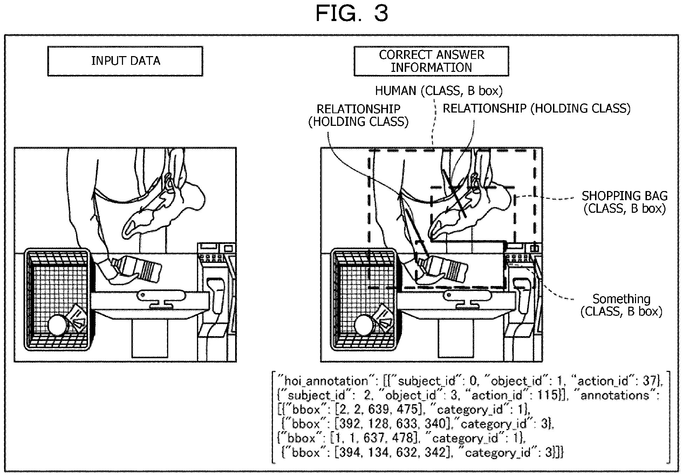

The training data DB 103 is a database that stores data to be used for training a first machine learning model 104A. For example, an example in which Human-Object Interaction Detection (HOID) is employed in the first machine learning model 104A will be described with reference to FIG. 3. FIG. 3 is a diagram for describing an example of training data of the first machine learning model 104A. As illustrated in FIG. 3, each piece of training data includes image data serving as input data and correct answer information set for the image data.

Classes of human and an object to be detected, a class indicating an interaction between the human and the object, and a bounding box (Bbox: region information of an object) indicating a region of each class are set as the correct answer information. For example, region information of a Something class indicating an object other than a shopping bag which is an object such as a merchandise, region information of the class of the human indicating the user who purchases a merchandise, and a relationship (holding class) indicating an interaction between the Something class and the class of the human are set as the correct answer information. For example, information on an object held by the person is set as the correct answer information.

Region information of a class of the shopping bag class indicating the shopping bag, region information of the class of the human indicating the user who uses the shopping bag, and a relationship (holding class) indicating an interaction between the class of the shopping bag and the class of the human are set as the correct answer information. For example, information on the shopping bag held by the person is set as the correct answer information.

Generally, when the Something class is created by normal object identification (object recognition), all objects unrelated to a task, such as all backgrounds, clothing items, and small objects, are detected. Since all of the objects are Something, a large number of Bboxes are merely identified in the image data, and nothing is known. In a case of HOID, since the HOID is known to be a special relationship of an object held by human (there may be cases of other relationships such as seated, operating, and the like), the HOID may be used as meaningful information for a task (for example, an unauthorized activity detection task of the self-checkout). After an object is detected by Something, a shopping bag or the like is identified as a unique class called Bag (shopping bag). Since this shopping bag is valuable information in the unauthorized activity detection task of the self-checkout but is not important information in other tasks, it is valuable to use the shopping bag based on the unique knowledge of the unauthorized activity detection task of the self-checkout that the merchandise is taken out from a basket (shopping basket) and stored in the bag, and a useful effect is obtained.

### <2-2-2. Machine learning model>

Referring back to FIG. 2, the machine learning model 104 indicates a machine learning model used for the unauthorized activity detection task of the self-checkout 50. Examples of the machine learning model 104 may include a first machine learning model 104A used from an aspect of specifying an object held by the user 2, for example, a merchandise, and a second machine learning model 104B used from an aspect of specifying an item of the merchandise.

By way of example only, the first machine learning model 104A may be implemented by the above-described HOID. In this case, the first machine learning model 104A identifies human, the merchandise, and a relationship between the human and the merchandise from input image data, and outputs an identification result. For example, "class and region information of human, class and region information of merchandise (object), and interaction between human and merchandise" is output. Although an example in which the first machine learning model 104A is implemented by the HOID has been described, the first machine learning model may be implemented by a machine learning model using various neural networks or the like.

By way of example only, the second machine learning model 104B may be implemented by a zero-shot image classifier. In this case, the second machine learning model 104B receives, as inputs, a list of texts and an image, and outputs, as a label of the image, a text having a highest similarity to the image in the list of texts.

Examples of the above-described zero-shot image classifier include contrastive language-image pre-training (CLIP). The CLIP implements embedding of a plurality of types of images and texts into a so-called multimodal feature space. For example, the image encoder and the text encoder are trained in the CLIP, and thus, embedding in which a distance between vectors of a pair of an image and a text that are close to each other in meaning is close is implemented. For example, the image encoder may be implemented by a vision transformer (ViT), or may be implemented by a convolution-type neural network such as, for example, ResNet. The text encoder may be implemented by a generative pre-trained transformer (GPT)-based transformer, or may be implemented by a regression type neural network, for example, a long short-term memory (LSTM).

### <2-2-3. Hierarchical structure DB>

The hierarchical structure DB 105 is a database that stores a hierarchical structure in which attributes of merchandises are listed for each of a plurality of hierarchies. The hierarchical structure DB 105 is data generated by a data generation unit 112 to be described below and corresponds to an example of a reference data to which the zero-shot image classifier used as an example of the second machine learning model 104B refers. For example, in the text encoder of the zero-shot image classifier, a list in which texts corresponding to attributes of merchandises belonging to an identical hierarchy are listed is referred to in order from an upper hierarchy, for example, a shallow hierarchy among the hierarchies included in the hierarchical structure DB 105.

### <2-2-4. Video data DB>

The video data DB 106 is a database that stores video data captured by the camera 30 installed in the self-checkout 50. For example, the video data DB 106 stores image data acquired from the camera 30, an output result of the HOID in which the image data is input to the HOID, and the like in units of frames for each self-checkout 50 or for each camera 30.

### <2-2-5. Self-checkout data DB>

The self-checkout data DB 107 is a database that stores various kinds of data acquired from the self-checkout 50. For example, the self-checkout data DB 107 stores, for each self-checkout 50, an item name and the number of purchases of a merchandise for which checkout registration is performed as a purchase target, a charge amount that is a total of amounts of money of all merchandises to be purchased, and the like.

### <2-3. Control unit>

The control unit 110 is a processing unit that controls the entire information processing apparatus 100 and is implemented by using, for example, a processor or the like. The control unit 110 includes a machine learning unit 111, a data generation unit 112, a video acquisition unit 113, a self-checkout data acquisition unit 114, an unauthorized activity detection unit 115, and an alert generation unit 118. The machine learning unit 111, the data generation unit 112, the video acquisition unit 113, the self-checkout data acquisition unit 114, the unauthorized activity detection unit 115, and the alert generation unit 118 is implemented by an electronic circuit included in the processor, a process executed by the processor, or the like.

### <2-3-1. Machine learning unit>

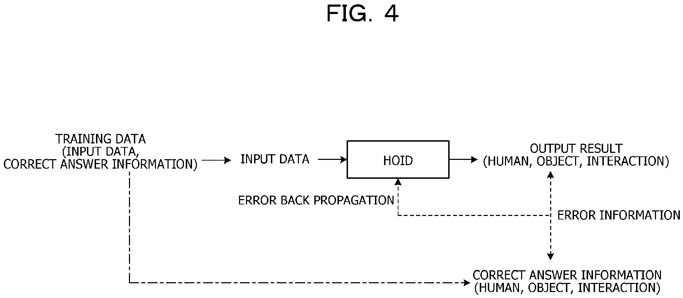

The machine learning unit 111 is a processing unit that executes machine learning of the machine learning model 104. As one aspect, the machine learning unit 111 executes machine learning of the first machine learning model 104A by using each piece of training data stored in the training data DB 103. FIG. 4 illustrates a diagram for describing the machine learning of the first machine learning model 104A. FIG. 4 illustrates an example in which the HOID is used for the first machine learning model 104A. As illustrated in FIG. 4, the machine learning unit 111 inputs input data of the training data to the HOID and acquires an output result of the HOID. Examples of the output result include the class of the human, the class of the object, the interaction between the human and the object, and the like detected by the HOID. The machine learning unit 111 calculates error information between correct answer information of the training data and an output result of the HOID, and executes machine learning of the HOID by error back propagation so as to reduce the error. Accordingly, the trained first machine learning model 104A is generated. The trained first machine learning model 104A generated in this manner is stored in the storage unit 102.

As another aspect, the machine learning unit 111 executes machine learning of the second machine learning model 104B. Although an example in which the second machine learning model 104B is trained by the machine learning unit 111 of the information processing apparatus 100 has been described, since the trained second machine learning model 104B is made public on the Internet or the like, the machine learning by the machine learning unit 111 may not be executed. After the trained second machine learning model 104B is applied to an operation of the self-checkout system 5, the machine learning unit 111 may execute fine-tuning in a case where accuracy is insufficient.

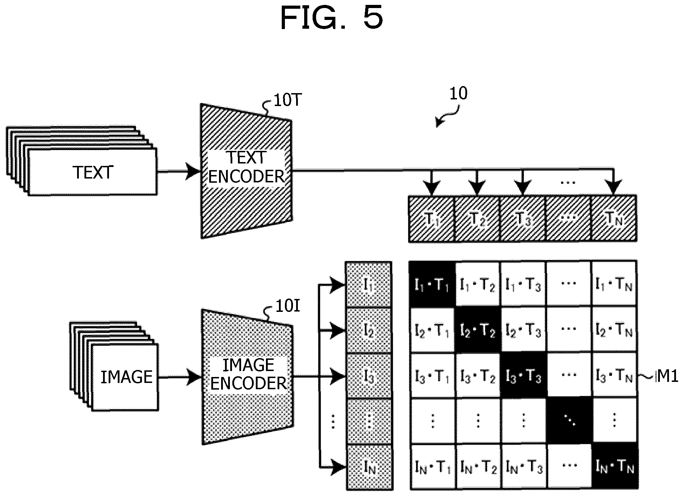

FIG. 5 is a diagram for describing the machine learning of the second machine learning model 104B. FIG. 5 illustrates a CLIP model 10 as an example of the second machine learning model 104B. As illustrated in FIG. 5, the pair of the image and the text is used as training data for training of the CLIP model 10. A data set, so-called WebImageText (WIT), in which a pair of an image and a text described as a caption of the image is extracted from a web page over the Internet may be used for such training data. For example, a pair of an image such as a photograph on which a dog is captured or a picture in which an illustration of a dog is drawn and a text "photograph of dog" described as a caption of the image is set as the training data. A work with a label may be omitted and a large amount of training data may be acquired by using the WIT for the training data in this manner.

Among these pairs of images and texts, the image is input to an image encoder 10I, and the text is input to a text encoder 10T. The image encoder 10I to which the image is input in this manner outputs a vector for embedding the image in a feature space. The text encoder 10T to which the text is input outputs a vector for embedding the text in a feature space.

For example, FIG. 5 illustrates a mini-batch having a batch size N including training data of N pairs of a pair of an image 1 and a text 1, a pair of an image 2 and a text 2, ..., and a pair of an image N and a text N. In this case, a similarity matrix M1 of N × N embedded vectors may be obtained by inputting each of the N pairs of images and texts to the image encoder 10I and the text encoder 10T. By way of example only, the "similarity" referred to herein may be an inner merchandise or a cosine similarity between the embedded vectors.

For training of the CLIP model 10, since labels are indefinite due to various formats of captions of texts of Web, an objective function called Contrastive objective is used.

As for Contrastive objective, in the case of an i-th image of the mini-batch, since an i-th text corresponds to a correct pair, the i-th text is set as a positive example, and all other texts are set as negative examples. For example, since one positive example and N-1 negative examples are set for each piece of training data, N positive examples and N²-N negative examples are generated for the entire mini-batch. For example, in the example of the similarity matrix M1, elements of N diagonal components displayed in a black and white inverted manner are set as positive examples, and N²-N elements displayed in a white background are set as negative examples.

Under such a similarity matrix M1, parameters of the image encoder 10I and the text encoder 10T that maximize similarities between N pairs corresponding to the positive examples and minimize similarities between N²-N pairs corresponding to the negative examples are trained.

For example, in the example of a first image 1, a first text is set as a positive example, a second text and subsequent texts are set as negative examples, and a loss of the similarity matrix M in a row direction, for example, a cross entropy error is calculated. The loss related to the image is obtained by executing such a loss calculation for each of the N images. In the example of the second text 2, a second image is set as a positive example, all images other than the second image are set as negative examples, and a loss is calculated in a column direction of the similarity matrix M. The loss related to the text is obtained by executing such a loss calculation for each of the N texts. An update of a parameter that minimizes a statistical value, for example, an average, of the loss related to the image and the loss related to the text is executed in the image encoder 10I and the text encoder 10T.

The trained CLIP model 10 is generated by training the image encoder 10I and the text encoder 10T that minimize the Contrastive objective.

### <2-3-2. Data generation unit>

Referring back to the description of FIG. 2, the data generation unit 112 is a processing unit that generates reference data to be referred to by the second machine learning model 104B. By way of example only, the data generation unit 112 generates a list of texts, so-called class captions, to be input to the zero-shot image classifier which is an example of the second machine learning model 104B.

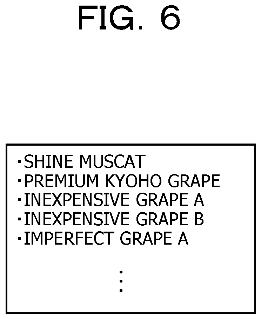

For example, the data generation unit 112 acquires a merchandise list of a store such as a supermarket or a convenience store. By way of example only, the acquisition of such a merchandise list may be implemented by acquiring a list of merchandises registered in a merchandise master in which merchandises of a store are made into a database. Accordingly, by way of example only, the merchandise list illustrated in FIG. 6 is acquired. FIG. 6 is a diagram illustrating an example of the merchandise list. FIG. 6 illustrates "Shine Muscat", "premium Kyoho grape", "inexpensive grape A", "inexpensive grape B", and "imperfect grape A" as examples of merchandise items related to a fruit "grape" among all merchandises sold in a store.

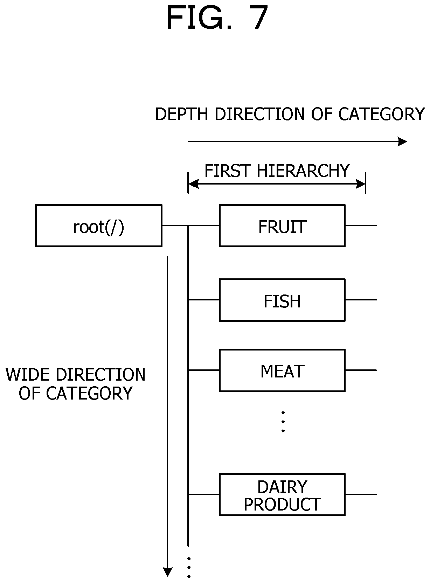

By way of example only, the data generation unit 112 acquires a template having a hierarchical structure illustrated in FIG. 7. The acquisition of the template having the hierarchical structure may be generated by setting categories of merchandises sold in a store, for example, "fruit", "fish", "meat", or the like as elements in a first hierarchy. FIG. 7 is a diagram illustrating an example of the template. As illustrated in FIG. 7, the template has a hierarchical structure in which root is the uppermost. Categories such as "fruit", "fish", "meat", ..., and "dairy product" are included as elements (nodes) in the first hierarchy at a depth of "1" from the root. Although the template in which the category of the merchandise is set as the first hierarchy is illustrated in FIG. 7 from an aspect of simplifying the description, a large classification of the merchandise, for example, a classification of fruit, fish, or the like may be set as the first hierarchy, and a small classification of the merchandise, for example, a classification of grape, apple, or the like may be set as a second hierarchy.

Subsequently, the data generation unit 112 adds an attribute designated by system definition or user definition, for example, an attribute related to "price" or the like, to each element in a lowest layer of the template of the hierarchical structure, for example, the first hierarchy at this point in time. Hereinafter, the attribute related to "price" is referred to as a "price attribute" in some cases. Although the price attribute is described below by way of example only of the attribute, details will be described later, it is added in advance that other attributes such as "color", "shape", and "inventory quantity" may be added.

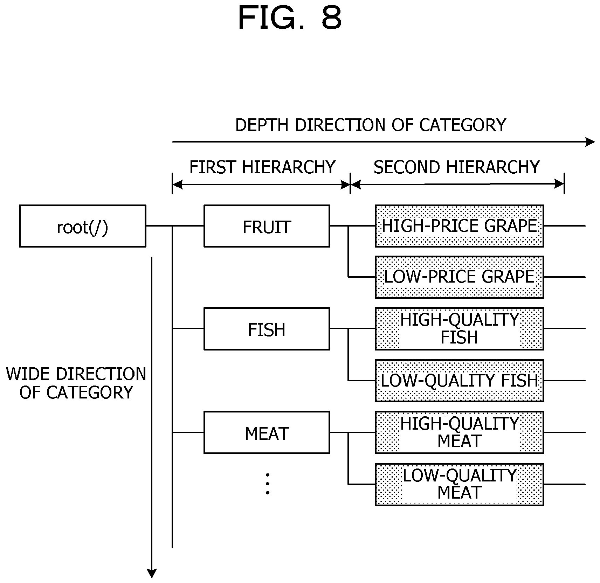

FIG. 8 is a diagram (1) for describing generation of hierarchical structure data. FIG. 8 illustrates elements of portions corresponding to the template illustrated in FIG. 7 in a white background and illustrates portions of attributes added to the elements in a hatched manner. As illustrated in FIG. 8, the attribute related to "price" is added to each element in the first hierarchy. For example, in the example of an element "fruit" in the first hierarchy, an element "high-price grape" in the second hierarchy and an element "low-price grape" in the second hierarchy are added to the element "fruit" in the first hierarchy. By way of example only, although an example in which two price attributes are added to one element has been described in FIG. 8, the present embodiment is not limited thereto, and less than two or three or more price attributes may be added to one element. For example, three price attributes of the element "high-price grape" in the second hierarchy, an element "medium-price grape" in the second hierarchy, and the element "low-price grape" in the second hierarchy may be added to the element "fruit" in the first hierarchy. Alternatively, the number of price attributes to be assigned may be changed in accordance with the elements in the first hierarchy. In this case, the number of price attributes may be increased as the number of merchandise items belonging to the element in the first hierarchy or the price variance is increased.

For each of the element in the lowest layer of the hierarchical structure being generated, for example, an element k having the price attribute belonging to the second hierarchy at a current point in time, the data generation unit 112 extracts merchandise items each having a similarity to the element k equal to or more than a threshold th1.

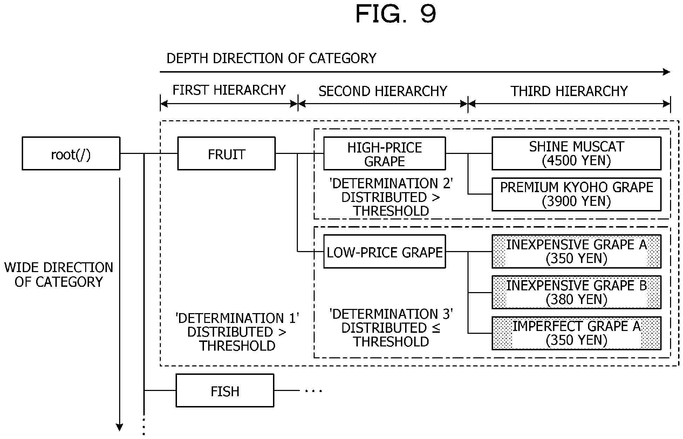

FIG. 9 is a diagram (2) for describing the generation of the hierarchical structure data. FIG. 9 illustrates an example related to the category "fruit" of a merchandise. For example, an extraction example of the merchandise item related to the element "high-price grape" in the second hierarchy illustrated in FIG. 9 will be described. In this case, an embedded vector of the element "high-price grape" in the second hierarchy is obtained by inputting the text "high-price grape" corresponding to the element "high-price grape" in the second hierarchy to the text encoder 10T of the CLIP model 10. An embedded vector of each merchandise item is obtained by inputting a text for each merchandise item included in the merchandise list illustrated in FIG. 7 to the text encoder 10T of the CLIP model 10. A similarity between the embedded vector of the element "high-price grape" in the second hierarchy and the embedded vector of each merchandise item is calculated. As a result, for the element "high-price grape" in the second hierarchy, the merchandise items "Shine Muscat" and "premium Kyoho grape" for which the degree of similarity to the embedded vector of the element "high-price grape" in the second hierarchy is equal to or more than the threshold th1 are extracted. Similarly, the merchandise items "inexpensive grape A", "inexpensive grape B", and "imperfect grape A" whose similarity to the embedded vector of the element "low-price grape" in the second hierarchy is equal to or more than the threshold th1 are extracted as the element "low-price grape" in the second hierarchy. Although an example in which the merchandise item is extracted by matching the embedded vectors between the texts has been described, one or both of the embedded vectors may be the embedded vector of the image.

Thereafter, the data generation unit 112 calculates, for each element n in a m hierarchy from a first hierarchy to an (M-1) hierarchy excluding an M hierarchy that is a lowest layer among all M hierarchies in a hierarchical structure being generated, a price variance V of merchandise items belonging to the element n. The data generation unit 112 determines whether or not the price variance V is equal to or less than a threshold th2. At this time, in a case where the price variance V is equal to or less than the threshold th2, the data generation unit 112 determines to abort the search for a hierarchy lower than the hierarchy of the element n. In a case where the price variance V is not equal to or less than the threshold th2, the data generation unit 112 increments a loop counter m of the hierarchy by one, and repeats the calculation of the price variance and the threshold determination of the variance for each element in a hierarchy immediately below the hierarchy.

By way of example only, a case where a first hierarchy illustrated in FIG. 9 is an m layer and an element "fruit" in the first hierarchy is an element n will be described as an example. In this case, as indicated by a broken line frame in FIG. 9, the element "fruit" in the first hierarchy includes five merchandise items such as Shine Muscat (4500 yen), premium Kyoho grape (3900 yen), inexpensive grape A (350 yen), inexpensive grape B (380 yen), and imperfect grape A (350 yen). At this time, since a price variance V₁₁ does not become equal to or less than the threshold th2 (determination 1 in the drawing), the search for the lower layer is continued. For example, the loop counter m of the hierarchy is incremented by one, and a second hierarchy is set to the m layer.

Next, a case where the second hierarchy illustrated in FIG. 9 is the m layer and an element "high-price grape" in the second hierarchy is the element n will be described as an example. In this case, as indicated by a dashed dotted line frame in FIG. 9, the element "high-price grape" in the second hierarchy includes two merchandise items such as Shine Muscat (4500 yen) and premium Kyoho grape (3900 yen). At this time, although a price variance V₂₁ does not become equal to or less than the threshold th2 (determination 2 in the drawing), since the element "high-price grape" in the second hierarchy is an element in a hierarchy immediately below a third hierarchy which is a lowest layer, the search is ended.

A case where the second hierarchy illustrated in FIG. 9 is the m layer and the element "low-price grape" in the second hierarchy is the element n will be described as an example. In this case, as indicated by a dashed double-dotted line frame in FIG. 9, the element "low-price grape" in the second hierarchy includes three merchandise items such as inexpensive grape A (350 yen), inexpensive grape B (380 yen), and imperfect grape A (350 yen). At this time, since a price variance V₂₂ is equal to or less than the threshold th2 (determination 3 in the drawing), it is determined to abort the search for the lower layer.

Thereafter, the data generation unit 112 repeats the search until it is determined to abort the search started for each element in the first hierarchy or until all elements in the (M-1)th hierarchy are searched. The data generation unit 112 determines a depth of each route in the hierarchical structure based on the determination result of the price variance obtained in the search described above.

By way of example only, in a case where there is the element in which the price variance of the merchandise items is equal to or less than the threshold th2 in a route from an uppermost element to an lowermost element in the hierarchical structure of all the M hierarchies, the data generation unit 112 sets the element as a terminal node. In a case where there is the element in which there is not the price variance of the merchandise items is equal to or less than the threshold th2 in the route from the uppermost element to the lowermost element, the data generation unit 112 sets the element corresponding to the merchandise item as the terminal node.

For example, in the example illustrated in FIG. 9, a route coupling the element "fruit" in the first hierarchy, the element "high-price grape" in the second hierarchy, and the element "Shine Muscat" in the third hierarchy or the element "premium Kyoho grape" in the third hierarchy will be described as an example. In this route, neither the price variance V₁₁ in the element "fruit" in the first hierarchy nor the price variance V₂₁ in the element "high-price grape" in the second hierarchy is determined to be equal to or less than the threshold th2. Accordingly, in this route, the element "Shine Muscat" in the third hierarchy and the element "premium Kyoho grape" in the third hierarchy are set as the terminal nodes.

Next, in the example illustrated in FIG. 9, a route coupling the element "fruit" in the first hierarchy, the element "low-price grape" in the second hierarchy, the element "inexpensive grape A" in the third hierarchy, the element "inexpensive grape B" in the third hierarchy, or the element "imperfect grape A" in the third hierarchy will be described as an example. In this route, the price variance V₁₁ in the element "fruit" in the first hierarchy is not determined to be equal to or less than the threshold th2, but the price variance V₂₂ in the element "low-price grape" in the second hierarchy is determined to be equal to or less than the threshold th2. Accordingly, in this route, the element "low-price grape" in the second hierarchy is set as the terminal node.

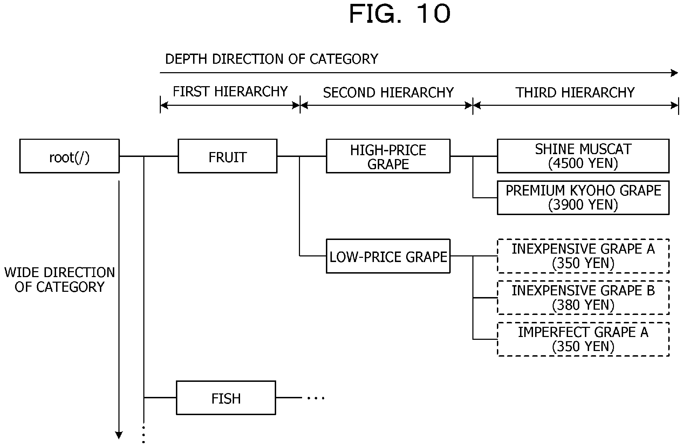

The depth of each route in the hierarchical structure of M hierarchies illustrated in FIG. 9 is determined in this manner, and thus, the hierarchical structure illustrated in FIG. 10 is confirmed. The hierarchical structure generated in this manner is stored in the hierarchical structure DB 105 of the storage unit 102.

FIG. 10 is a diagram illustrating an example of the hierarchical structure. In FIG. 10, elements after the terminal node where the price variance of the merchandise items is equal to or less than the threshold th2 are indicated by broken lines. As illustrated in FIG. 10, the hierarchical structure includes a route coupling the element "fruit" in the first hierarchy, the element "high-price grape" in the second hierarchy, and the element "Shine Muscat" in the third hierarchy or the element "premium Kyoho grape" in the third hierarchy. The hierarchical structure includes a route coupling the element "fruit" in the first hierarchy and the element "low-price grape" in the second hierarchy.

In accordance with such a hierarchical structure, the list of class captions is input to the zero-shot image classifier which is an example of the second machine learning model 104B. For example, as the list of class captions in the first hierarchy, a list of the text "fruit", the text "fish", and the like is input to the text encoder 10T of the CLIP model 10. At this time, "fruit" is output as a label of a class corresponding to an input image to the image encoder 10I by the CLIP model. In this case, as the list of class captions in the second hierarchy, a list of the text "high-price grape" and the text "low-price grape" is input to the text encoder 10T of the CLIP model 10.

As described above, the list in which the texts corresponding to the attributes of the merchandises belonging to the identical hierarchy are listed in order from the upper hierarchy in the hierarchical structure is input as the class captions of the CLIP model 10. Accordingly, it is possible to cause the CLIP model 10 to narrow down candidates for the merchandise item in units of a hierarchy. Thus, the processing cost for task implementation may be reduced as compared with a case where a list of texts corresponding to all merchandise items in a store is input as the class captions of the CLIP model 10.

In the hierarchical structure to be referred to by the CLIP model 10, since the lower elements than the element in which the price variance of the merchandise items is equal to or less than the threshold th2 are omitted, the merchandise items having a small difference in the amount of damage at the time of occurrence of the unauthorized activity may be clustered. Accordingly, the processing cost for task implementation may be further reduced.

In a store such as a supermarket or a convenience store, since there are a large number of types of merchandises and a life cycle of each merchandise is short, replacement of merchandises frequently occurs.

Hierarchical structure data to be referred to by the CLIP model 10 is a plurality of merchandise candidates disposed in the store at a current point in time among candidates for a large number of types of merchandise to be replaced. For example, a part of the hierarchical structure of the CLIP model 10 may be updated in accordance with the replacement of the merchandises disposed in the store. Among candidates for a large number of types of merchandises to be replaced, the plurality of candidate merchandises disposed in the store may be easily managed at a current point in time.

### <2-3-3. Video acquisition unit>

Referring back to the description of FIG. 2, the video acquisition unit 113 is a processing unit that acquires video data from the camera 30. For example, the video acquisition unit 113 acquires the video data from the camera 30 installed in the self-checkout 50 at arbitrary cycle, for example, in units of frames. In a case where image data of a new frame is acquired, the video acquisition unit 113 inputs the image data to the first machine learning model 104A, for example, the HOID model, and acquires an output result of the HOID. For each frame, the video acquisition unit 113 stores the image data of the frame and the output result of the HOID of the frame in association with each other in the video data DB 106.

### <2-3-4. Self-checkout data acquisition unit>

The self-checkout data acquisition unit 114 is a processing unit that acquires, as the self-checkout data, information on the merchandise for which checkout registration is performed in the self-checkout 50. The "checkout registration" referred to herein may be implemented by scanning the merchandise code printed or attached to the merchandise or may be implemented by manual input of the merchandise code by the user 2. In this case, a field for inputting the number may be included as a user interface. A reason why an operation of causing the user 2 to manually input the merchandise code as in the latter case is performed is that labels of codes may not be printed or attached to all merchandises. The self-checkout data acquired in response to the checkout registration in the self-checkout 50 in this manner is stored in the self-checkout data DB 107.

### <2-3-5. Unauthorized activity detection unit>

The unauthorized activity detection unit 115 is a processing unit that detects various unauthorized activities based on video data obtained by imaging the vicinity of the self-checkout 50. As illustrated in FIG. 2, the unauthorized activity detection unit 115 includes a first detection unit 116 and a second detection unit 117.

### <2-3-5-1. First detection unit>

The first detection unit 116 is a processing unit that detects an unauthorized activity of scanning a label of a high-price merchandise replaced with a label of a low-price merchandise, for example, a so-called label switch.

As one aspect, in a case where a new merchandise code is acquired through scanning in the self-checkout 50, the first detection unit 116 starts processing. In this case, the first detection unit 116 searches for a frame corresponding to a time at which a merchandise code is scanned among the frames stored in the video data DB 106. The first detection unit 116 generates an image of the merchandise held by the user 2 based on the output result of the HOID corresponding to the frame matched by the search. Hereinafter, the image of the merchandise held by the user 2 is referred to as a "hand-held merchandise image" in some cases.

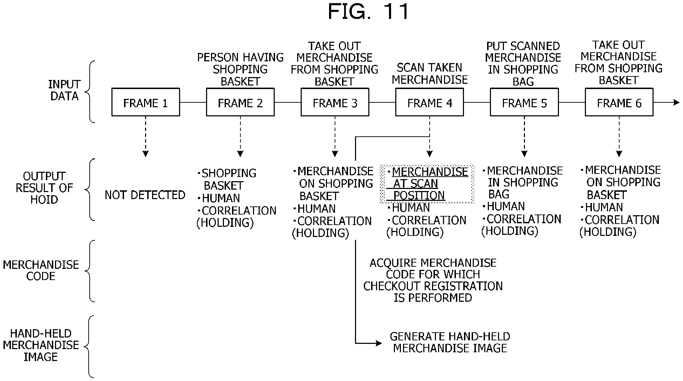

FIG. 11 is a diagram (1) illustrating the generation of the hand-held merchandise image. FIG. 11 illustrates image data which is input data to the HOID model and output results of the HOID in chronological order of frame numbers "1" to "6" acquired from the camera 30. For example, in the example illustrated in FIG. 11, a frame which is the shortest from the time at which the merchandise code for which checkout registration is performed in the self-checkout 50 is scanned with the time as a reference and in which a degree of overlap between the Bbox of the object and the scan position is equal to or more than a threshold, and an interaction is the holding class is searched for. As a result, the hand-held merchandise image is generated by using the output result of the HOID with the frame number "4" matched in the search. Accordingly, the image of the merchandise held by the user 2 at the scan position may be specified.

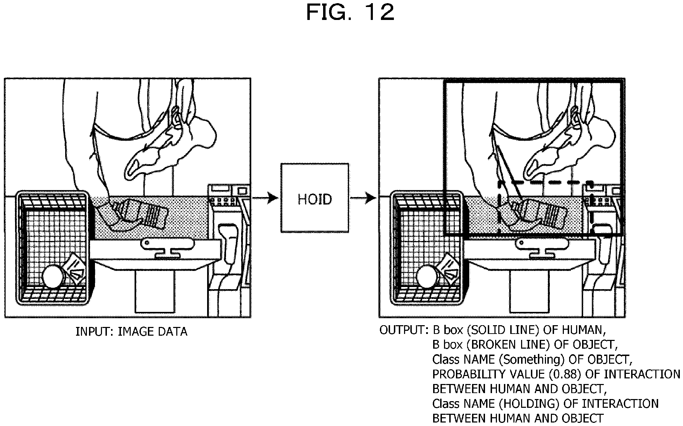

FIG. 12 is a diagram (2) for describing the generation of the hand-held merchandise image. FIG. 12 illustrates image data corresponding to the frame number "4" illustrated in FIG. 11 and the output result of the HOID in a case where the image data is input to the HOID model. In FIG. 12, the Bbox of the human is indicated by a solid line frame, and the Bbox of the object is indicated by a broken line frame. As illustrated in FIG. 12, the output result of the HOID includes the Bbox of the human, the Bbox of the object, a probability value of the interaction between the human and the object, a class name, and the like. Among these output results, while referring to the Bbox of the object, the first detection unit 116 generates the hand-held merchandise image by cutting out a partial image corresponding to the Bbox of the object, for example, the broken line frame in FIG. 12 from the image data of the frame number "4".

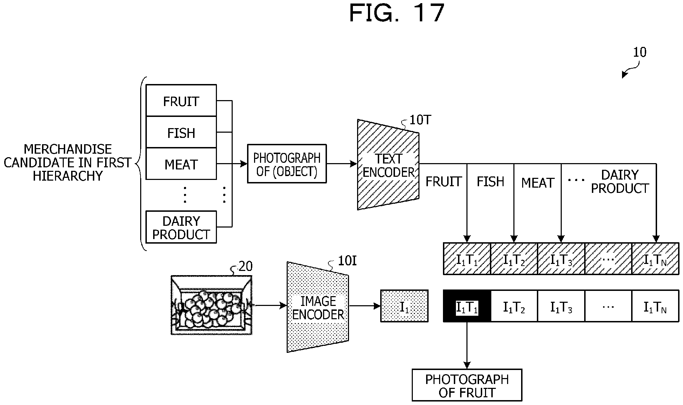

After the hand-held merchandise image is generated in this manner, the first detection unit 116 inputs the hand-held merchandise image to the zero-shot image classifier which is an example of the second machine learning model 104B. The first detection unit 116 inputs, to the zero-shot image classifier, the list in which the texts corresponding to the attributes of the merchandises belonging to the identical hierarchy are listed in order from the upper hierarchy according to the hierarchical structure stored in the hierarchical structure DB 105. Accordingly, as the hierarchy of the text input to the zero-shot image classifier becomes deeper, the candidates for the merchandise item are narrowed down. The first detection unit 116 determines whether or not the merchandise item for which the checkout registration is performed through the scanning and the merchandise item specified by the zero-shot image classifier or a merchandise item group included in an upper attribute of the merchandise item coincide with each other. At this time, in a case where both the merchandise items do not coincide with each other, the fact that the label switch is performed may be detected. Details of the specification of the merchandise item using the zero-shot image classifier will be described below with reference to FIGs. 17 to 21.

### <2-3-5-2. Second detection unit>

The second detection unit 117 is a processing unit that detects an unauthorized activity of performing the checkout registration of the low-price merchandise instead of performing the checkout registration of a high-price merchandise without a label, for example, a banana trick. The checkout registration for a merchandise without a label in this manner is performed by manual input of the user 2.

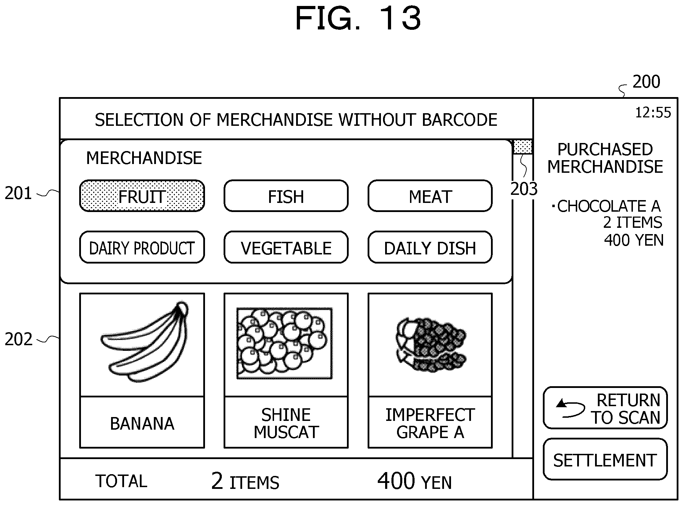

By way of example only, the self-checkout 50 accepts checkout registration of a merchandise without a label through an operation on a selection screen for a merchandise without a code illustrated in FIG. 13 in some cases.

FIG. 13 is a diagram (1) illustrating a display example of the self-checkout 50. As illustrated in FIG. 13, a selection screen 200 for the merchandise without a code may include a display area 201 for the category of the merchandise and a display area 202 for the merchandise item belonging to the category being selected. For example, an example in which the category "fruit" of the merchandise is being selected from among the categories "fruit", "fish", "meat", "dairy product", "vegetable", and "daily dish" of the merchandises included in the display area 201 is illustrated on the selection screen 200 for the merchandise without a code illustrated in FIG. 13. In this case, the display area 202 displays the merchandise items such as "banana", "Shine Muscat", and "imperfect grape A" belonging to the category "fruit" of the merchandise. In a case where there is no space for disposing all the merchandise items belonging to the category "fruit" of the merchandise in the display area 202, a range in which the merchandise items are disposed may be widened by scrolling a display range of the display area 202 via a scroll bar 203. A selection operation from among the merchandise items displayed in such a display area 202 is selected, and thus, the checkout registration of the merchandise without a label may be accepted.

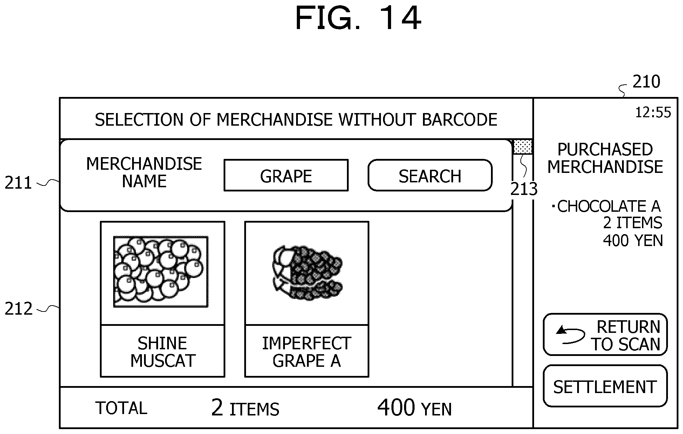

As another example, the self-checkout 50 accepts the checkout registration of the merchandise without a label through an operation on the search screen for the merchandise without a code illustrated in FIG. 14 in some cases.

FIG. 14 is a diagram (2) illustrating the display example of the self-checkout 50. As illustrated in FIG. 14, a search screen 210 for the merchandise without a code may include a search area 211 for searching for the merchandise and a display area 212 in which a list of search results is displayed. For example, a case where "grape" is designated as a search keyword is illustrated on the search screen 210 for the merchandise without a code illustrated in FIG. 14. In this case, the merchandise items "Shine Muscat", "imperfect grape A", and the like are displayed as the search results of the search keyword "grape" in the display area 212. In a case where there is no space for disposing all the merchandise items of the search result in the display area 212, a range in which the merchandise items are disposed may be widened by scrolling a display range of the display area 212 via a scroll bar 213. A selection operation from among the merchandise items displayed in such a display area 212 is accepted, and thus, the checkout registration of the merchandise without a label may be accepted.

A case where the manual input of the merchandise without a label is accepted through the selection screen 200 for the merchandise without a code or the search screen 210 for the merchandise without a code, there is an aspect in which the manual input of the self-checkout 50 may not be performed while the user 2 holds the merchandise.

From such an aspect, in a case where a new merchandise code is acquired through the manual input in the self-checkout 50, the second detection unit 117 starts the following processing. By way of example only, the second detection unit 117 searches for a frame in which the holding class is detected by the latest HOID retroactively from a time at which the merchandise code is manually input among the frames stored in the video data DB 106. The second detection unit 117 generates the hand-held merchandise image of the merchandise without a label based on the output result of the HOID corresponding to the frame matched by the search.

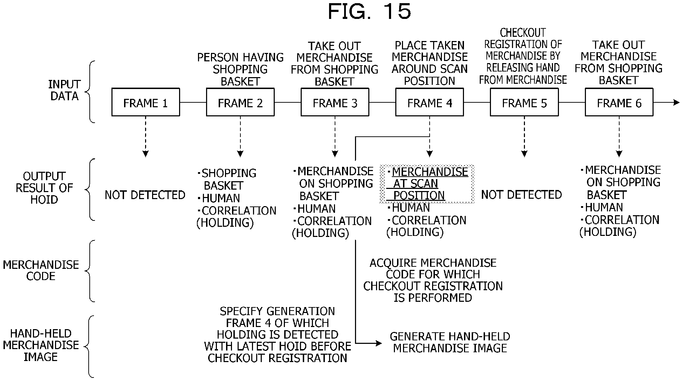

FIG. 15 is a diagram (3) for describing the generation of the hand-held merchandise image. FIG. 15 illustrates image data which is input data to the HOID model and output results of the HOID in chronological order of frame numbers "1" to "6" acquired from the camera 30. For example, in the example illustrated in FIG. 15, a frame which is a latest frame retroactively from a time corresponding to the frame number "5" for which the merchandise code for which checkout registration is performed in the self-checkout 50 is manually input with the time as a reference, in which a degree of overlap between the Bbox of the object and the scan position is equal to or more than a threshold, and an interaction is the holding class is searched for. As a result, the hand-held merchandise image is generated by using the output result of the HOID with the frame number "4" matched in the search. Accordingly, an image on which the user 2 holds the merchandise without a label may be specified.

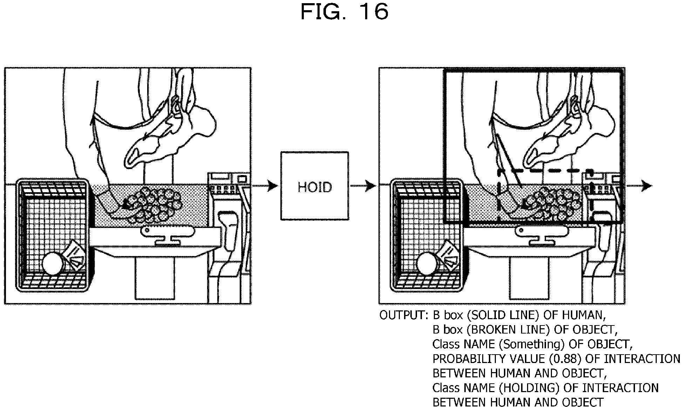

FIG. 16 is a diagram (4) for describing the generation of the hand-held merchandise image. FIG. 16 illustrates image data corresponding to the frame number "4" illustrated in FIG. 15 and the output result of the HOID in a case where the image data is input to the HOID model. In FIG. 16, the Bbox of the human is indicated by a solid line frame, and the Bbox of the object is indicated by a broken line frame. As illustrated in FIG. 16, the output result of the HOID includes the Bbox of the human, the Bbox of the object, a probability value of the interaction between the human and the object, a class name, and the like. Among these output results, while referring to the Bbox of the object, the second detection unit 117 generates the hand-held merchandise image of the merchandise without a label by cutting out a partial image corresponding to the Bbox of the object, for example, the broken line frame in FIG. 15 from the image data of the frame number "4".

After the hand-held merchandise image is generated in this manner, the second detection unit 117 inputs the hand-held merchandise image to the zero-shot image classifier which is an example of the second machine learning model 104B. The second detection unit 117 inputs, to the zero-shot image classifier, the list in which the texts corresponding to the attributes of the merchandises belonging to the identical hierarchy are listed in order from the upper hierarchy according to the hierarchical structure stored in the hierarchical structure DB 105. Accordingly, as the hierarchy of the text input to the zero-shot image classifier becomes deeper, the candidates for the merchandise item are narrowed down. The second detection unit 117 determines whether or not the merchandise item for which the checkout registration is performed through the manual input and the merchandise item specified by the zero-shot image classifier or the merchandise item group included in the upper attribute of the merchandise item coincide with each other. At this time, in a case where both the merchandise items do not coincide with each other, the fact that the banana trick is performed may be detected.

### (1) Specific case 1 of merchandise item

Next, the specification of the merchandise item using the zero-shot image classifier will be described by using a case. FIGs. 17 to 19 are schematic diagrams (1) to (3) illustrating a case 1 of specifying the merchandise item. FIGs. 17 to 19 illustrate an example in which a partial image of Bbox corresponding to the merchandise item "Shine Muscat" held by the user 2 is generated by way of example only of a hand-held merchandise image 20.

As illustrated in FIG. 17, the hand-held merchandise image 20 is input to the image encoder 10I of the CLIP model 10. As a result, the image encoder 10I outputs an embedded vector I₁ of the hand-held merchandise image 20.

In the text encoder 10T of the CLIP model 10, the texts "fruit", "fish", "meat", and "dairy product" corresponding to the elements in the first hierarchy are input as the list of class captions in accordance with the hierarchical structure illustrated in FIG. 10.

At this time, although the texts "fruit", "fish", "meat", and "dairy product" may be input to the text encoder 10T with no change, "Prompt Engineering" may be performed from an aspect of changing a format of the class caption at the time of inference to a format of the class caption at the time of training. For example, a text corresponding to the attribute of the merchandise, for example, "fruit" may be inserted into a portion of {object} of "photograph of {object}", and may be input as "photograph of fruit".

As a result, the text encoder 10T outputs an embedded vector T₁ of the text "fruit", an embedded vector T₂ of the text "fish", an embedded vector T₃ of the text "meat", ..., and an embedded vector T_{N} of the text "dairy product".

Similarities are calculated between the embedded vector I₁ of the hand-held merchandise image 20, the embedded vector T₁ of the text "fruit", the embedded vector T₂ of the text "fish", the embedded vector T₃ of the text "meat", and the embedded vector T_{N} of the text "dairy product".

As illustrated in black and white inverted display in FIG. 17, in the present example, the similarity between the embedded vector I₁ of the hand-held merchandise image 20 and the embedded vector T₁ of the text "fruit" is maximized. Thus, the CLIP model 10 outputs "fruit" as a prediction result of the class of the hand-held merchandise image 20.

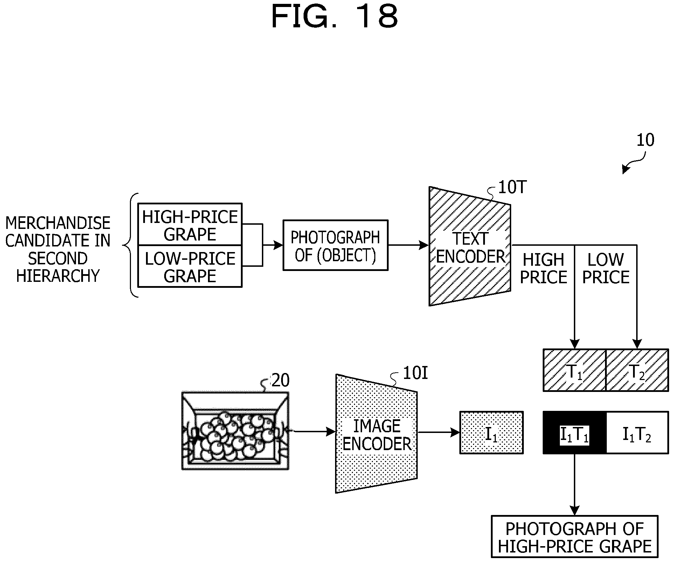

Since the prediction result "fruit" in the first hierarchy obtained in this manner is not the terminal node in the hierarchical structure illustrated in FIG. 10, the inference of the CLIP model 10 is continued. For example, as illustrated in FIG. 18, the texts "high-price grape" and "low-price grape" corresponding to the elements in the second hierarchy belonging to a lower layer of the prediction result "fruit" in the first hierarchy are input as the list of class captions in accordance with the hierarchical structure illustrated in FIG. 10. It goes without saying that "Prompt Engineering" may be performed as in the example illustrated in FIG. 17 when the text is input.

As a result, the text encoder 10T outputs the embedded vector T₁ of the text "high-price grape" and the embedded vector T₂ of the text "high-price grape". Similarities are calculated between the embedded vector I₁ of the hand-held merchandise image 20, the embedded vector T₁ of the text "high-price grape", and the embedded vector T₂ of the text "low-price grape".

As illustrated in black and white inverted display in FIG. 18, in the present example, the similarity between the embedded vector I₁ of the hand-held merchandise image 20 and the embedded vector T₁ of the text "high-price grape" is maximized. Thus, the CLIP model 10 outputs "high-price grape" as a prediction result of the class of the hand-held merchandise image 20.

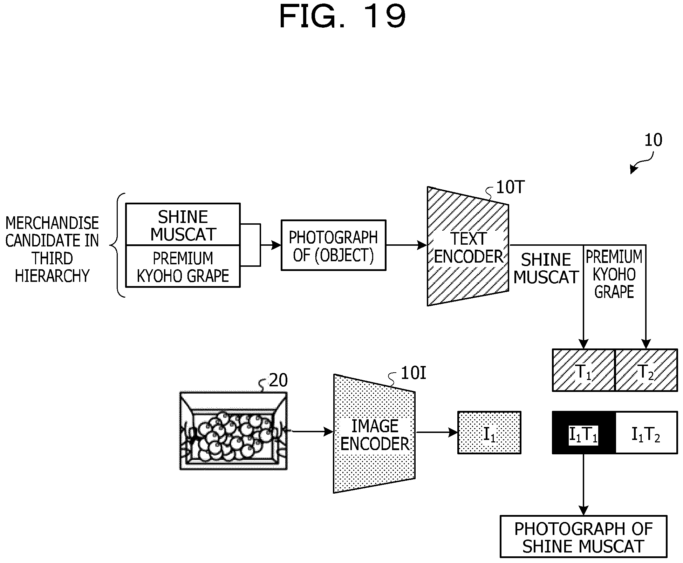

Since the prediction result "high-price grape" in the second hierarchy obtained in this manner is not the terminal node in the hierarchical structure illustrated in FIG. 10, the inference of the CLIP model 10 is continued. For example, as illustrated in FIG. 19, the texts "Shine Muscat" and "premium Kyoho grape" corresponding to the elements in the third hierarchy belonging to a lower layer of the prediction result "high-price grape" in the second hierarchy are input as the list of class captions in accordance with the hierarchical structure illustrated in FIG. 10.

As a result, the text encoder 10T outputs the embedded vector T₁ of the text "Shine Muscat" and the embedded vector T₂ of the text "premium Kyoho grape". Similarities are calculated between the embedded vector I₁ of the hand-held merchandise image 20, the embedded vector T₁ of the text "Shine Muscat", and the embedded vector T₂ of the text "premium Kyoho grape".

As illustrated in black and white inverted display in FIG. 19, in the present example, the similarity between the embedded vector I₁ of the hand-held merchandise image 20 and the embedded vector T₁ of the text "Shine Muscat" is maximized. Thus, the CLIP model 10 outputs "Shine Muscat" as a prediction result of the class of the hand-held merchandise image 20.

As described above, in the case 1, the merchandise candidates are narrowed down to "fruit" by inputting, to the text encoder 10T, a list of attributes of the merchandises corresponding to the elements in the first hierarchy as the class captions. The list of attributes of the merchandises belonging to a lower layer of the element "fruit" of the prediction result in the first hierarchy among the elements in the second hierarchy is input as the class captions to the text encoder 10T, and the merchandise candidates are narrowed down to "high-price grape". The list of attributes of the merchandises belonging to a lower layer of the element "high-price grape" of the prediction result in the second hierarchy among the elements in the third hierarchy is input as the class captions to the text encoder 10T, and thus, the merchandise candidates are narrowed down to "Shine Muscat". By such narrowing-down, the fact that the merchandise item included in the hand-held merchandise image 20 is "Shine Muscat" may be specified while the processing cost for task implementation is reduced as compared with the case where the texts corresponding to all the merchandise items in the store are input to the text encoder 10T.

By way of example only, in a case where the merchandise item for which the checkout registration is performed through the manual input is "imperfect grape A", the merchandise item does not coincide with the merchandise item "Shine Muscat" specified by the zero-shot image classifier. In this case, the fact that the banana trick is performed may be detected.

### (2) Specific case 2 of merchandise item

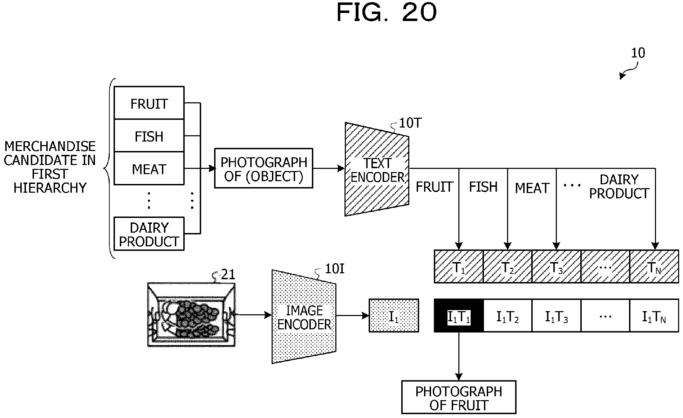

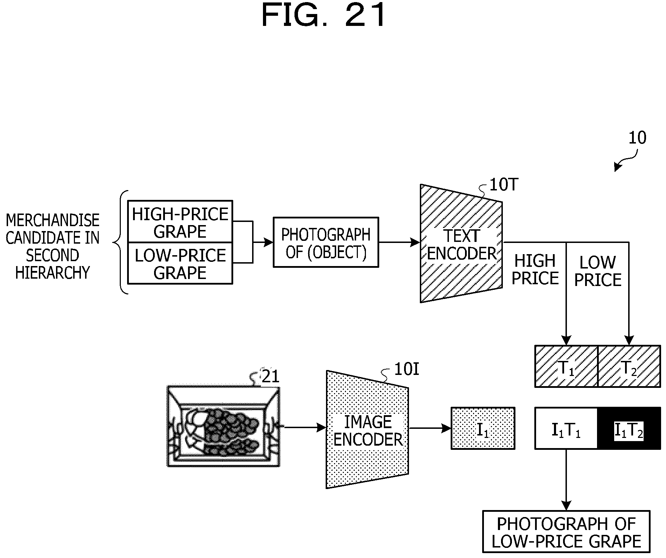

FIGs. 20 and 21 are schematic diagrams (1) and (2) illustrating a case 2 of specifying the merchandise item. FIGs. 20 and 21 illustrate an example in which a partial image of Bbox corresponding to the merchandise item "imperfect grape A" held by the user 2 is generated as another example of a hand-held merchandise image 21.

As illustrated in FIG. 20, the hand-held merchandise image 21 is input to the image encoder 10I of the CLIP model 10. As a result, the image encoder 10I outputs the embedded vector I₁ of the hand-held merchandise image 21.

In the text encoder 10T of the CLIP model 10, the texts "fruit", "fish", "meat", and "dairy product" corresponding to the elements in the first hierarchy are input as the list of class captions in accordance with the hierarchical structure illustrated in FIG. 10. It goes without saying that "Prompt Engineering" may be performed as in the example illustrated in FIG. 17 when the text is input.

As a result, the text encoder 10T outputs an embedded vector T₁ of the text "fruit", an embedded vector T₂ of the text "fish", an embedded vector T₃ of the text "meat", ..., and an embedded vector T_{N} of the text "dairy product".

Similarities are calculated between the embedded vector I₁ of the hand-held merchandise image 21, the embedded vector T₁ of the text "fruit", the embedded vector T₂ of the text "fish", the embedded vector T₃ of the text "meat", and the embedded vector T_{N} of the text "dairy product".

As illustrated in black and white inverted display in FIG. 20, in the present example, the similarity between the embedded vector I₁ of the hand-held merchandise image 21 and the embedded vector T₁ of the text "fruit" is maximized. Thus, the CLIP model 10 outputs "fruit" as a prediction result of the class of the hand-held merchandise image 21.

Since the prediction result "fruit" in the first hierarchy obtained in this manner is not the terminal node in the hierarchical structure illustrated in FIG. 10, the inference of the CLIP model 10 is continued. For example, as illustrated in FIG. 21, the texts "high-price grape" and "low-price grape" corresponding to the elements in the second hierarchy belonging to the lower layer of the prediction result "fruit" in the first hierarchy are input as the list of class captions in accordance with the hierarchical structure illustrated in FIG. 10.

As a result, the text encoder 10T outputs the embedded vector T₁ of the text "high-price grape" and the embedded vector T₂ of the text "high-price grape". Similarities are calculated between the embedded vector I₁ of the hand-held merchandise image 21, the embedded vector T₁ of the text "high-price grape", and the embedded vector T₂ of the text "low-price grape".

As illustrated in black and white inverted display in FIG. 21, in the present example, the similarity between the embedded vector I₁ of the hand-held merchandise image 21 and the embedded vector T₂ of the text "low-price grape" is maximized. Thus, the CLIP model 10 outputs "low-price grape" as a prediction result of the class of the hand-held merchandise image 21.

Since the prediction result "low-price grape" in the second hierarchy obtained in this manner is the terminal node in the hierarchical structure illustrated in FIG. 10, the inference of the CLIP model 10 is ended. As a result, the prediction result of the class of the hand-held merchandise image 21 is confirmed as "low-price grape".

As described above, in the case 2, as compared with the case 1 described above, a process of inputting, as the class captions, three elements "inexpensive grape A", "inexpensive grape B", and "imperfect grape A" in the third hierarchy in which the price variance of the merchandise items is equal to or less than the threshold th2 may be omitted. Accordingly, according to the case 2, the processing cost for task implementation may be further reduced.

For example, in a case where the merchandise item for which the checkout registration is performed through the manual input is "imperfect grape A", the merchandise item coincides with the merchandise item "imperfect grape A" included in the attribute "low-price grape" of the merchandise specified by the zero-shot image classifier. In this case, it may be determined that the banana trick is not performed.

### <2-3-6. Alert generation unit>

Referring back to the description of FIG. 2, the alert generation unit 118 is a processing unit that generates an alert related to an unauthorized activity detected by the unauthorized activity detection unit 115.

As one aspect, the alert generation unit 118 may generate an alert for the user 2 in a case where the unauthorized activity is detected by the unauthorized activity detection unit 115. The merchandise item for which the checkout registration is performed and the merchandise item specified by the zero-shot image classifier may be included as such an alert for the user 2.

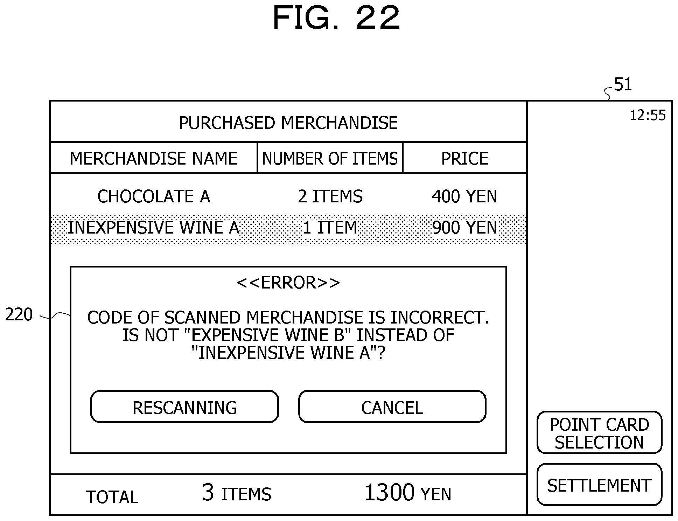

FIG. 22 is a diagram (1) illustrating a display example of the alert. FIG. 22 illustrates an alert displayed on the self-checkout 50 when the label switch is detected by the first detection unit 116. As illustrated in FIG. 22, an alert window 220 is displayed on a touch panel 51 of the self-checkout 50. A merchandise item "inexpensive wine A" for which the checkout registration is performed through the scanning and a merchandise item "expensive wine B" specified by image analysis of the zero-shot image classifier are displayed in the alert window 220 in a state where the merchandise items may be compared with each other. Alternatively, the alert window 220 may include a notification that prompts the user to perform scanning again. According to the display of such an alert window 220, the user may be warned against the detection of the label switch of scanning a label of "expensive wine B" replaced with a label of "inexpensive wine A". Thus, as a result of being able to prompt cancellation of settlement using the label switch, damage to the store due to the label switch may be suppressed.

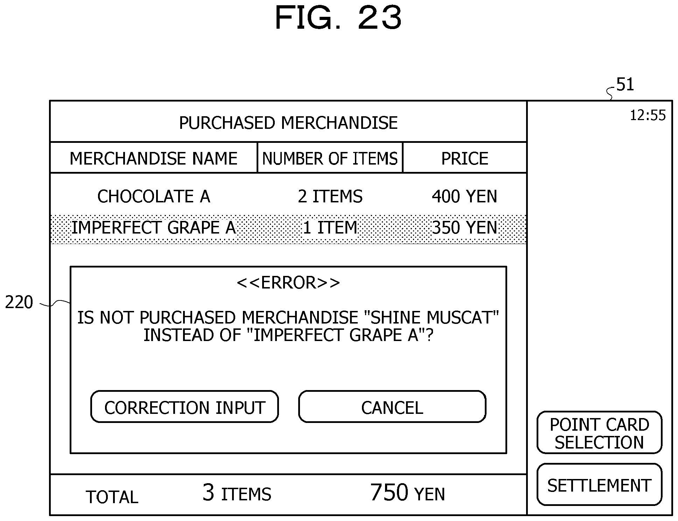

FIG. 23 is a diagram (2) illustrating the display example of the alert. FIG. 23 illustrates an alert displayed on the self-checkout 50 when the banana trick is detected by the second detection unit 117. As illustrated in FIG. 23, an alert window 230 is displayed on the touch panel 51 of the self-checkout 50. The merchandise item "imperfect grape A" for which the checkout registration is performed through the manual input and the merchandise item "Shine Muscat" specified by the image analysis of the zero-shot image classifier are displayed in the alert window 230 in a state where the merchandise items may be compared with each other. Alternatively, the alert window 230 may include a notification that prompts the user to perform a correction input again. According to the display of such an alert window 230, the user may be warned against the detection of the banana trick in which the checkout registration is performed by the manual input of "imperfect grape A" instead of the checkout registration in which "Shine Muscat" is to be manually input. Thus, as a result of being able to prompt cancellation of settlement using the banana trick, damage to the store due to the banana trick may be suppressed.

As another aspect, in a case where the unauthorized activity is detected by the unauthorized activity detection unit 115, the alert generation unit 118 may generate an alert for a person related to the store, for example, an administrator. A type of the unauthorized activity, identification information of the self-checkout 50 in which the unauthorized activity is detected, a damage estimated amount due to the unauthorized activity, and the like may be included as such an alert for the administrator of the store.

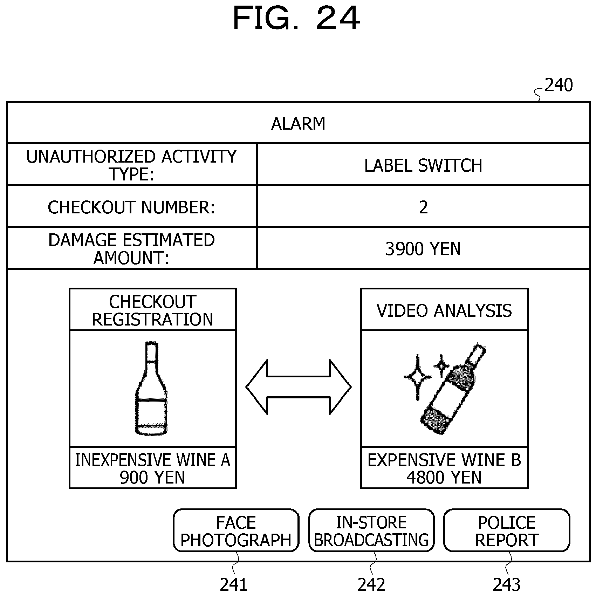

FIG. 24 is a diagram (3) illustrating the display example of the alert. FIG. 24 illustrates an alert displayed on a display unit of the administrator terminal 60 when the label switch is detected by the first detection unit 116. As illustrated in FIG. 24, an alert window 240 is displayed on the display unit of the administrator terminal 60. The merchandise item "inexpensive wine A" and the price "900 yen" for which the checkout registration is performed through the scanning and the merchandise item "expensive wine B" and the price "4800 yen" specified by image analysis are displayed in the alert window 240 in a state where the merchandise items and the prices may be compared with each other. The alert window 240 displays the unauthorized activity type "label switch", the checkout number "2" where the label switch occurs, and the damage estimated amount "3900 yen (= 4800 yen - 900 yen)" caused by the settlement by the label switch. Alternatively, the alert window 240 displays, for example, GUI components 241 to 243 for accepting requests such as display of a face photograph obtained by capturing the face or the like of the user 2 who uses the self-checkout 50 with the checkout number "2", in-store broadcasting, and notification to the police or the like. According to the display of such an alert window 240, the notification of the occurrence of the damage caused by the label switch, grasping a degree of damage, and presentation of various measures against the damage may be implemented. Thus, as a result of being able to prompt the user 2 to cope with the label switch, damage to the store caused by the label switch may be suppressed.

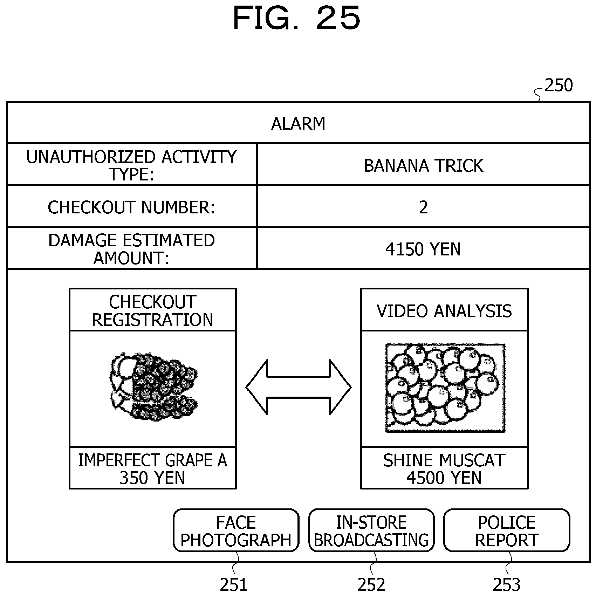

FIG. 25 is a diagram (4) illustrating the display example of the alert. FIG. 25 illustrates an alert displayed on the display unit of the administrator terminal 60 when the banana trick is detected by the second detection unit 117. As illustrated in FIG. 25, an alert window 250 is displayed on the display unit of the administrator terminal 60. The merchandise item "imperfect grape A" and the price "350 yen" for which the checkout registration is performed through the manual input and the merchandise item "Shine Muscat" and the price "4500 yen" specified by the image analysis are displayed in the alert window 250 in a state where the merchandise items and the prices may be compared with each other. The alert window 250 displays the unauthorized activity type "banana trick", the checkout number "2" where the banana trick occurs, and the damage estimated amount "4150 yen (= 4500 yen - 350 yen)" caused by the settlement in the banana trick. Alternatively, the alert window 250 displays, for example, GUI components 251 to 253 for accepting requests such as display of a face photograph obtained by capturing the face or the like of the user 2 who uses the self-checkout 50 with the checkout number "2", in-store broadcasting, and notification to the police or the like. According to the display of such an alert window 250, the notification of the occurrence of the damage of the banana trick, grasping a degree of damage, and presentation of various measures against the damage. Thus, as a result of being able to prompt the user 2 to cope with the banana trick, damage to the store caused by the banana trick may be suppressed.

### <3. Flow of processing>

Next, a flow of processing of the information processing apparatus 100 according to the present embodiment will be described. (1) data generation processing, (2) video acquisition processing, (3) first detection processing, (4) second detection processing, and (5) specification processing which are executed by the information processing apparatus 100 will be described in this order.

### (1) Data generation processing

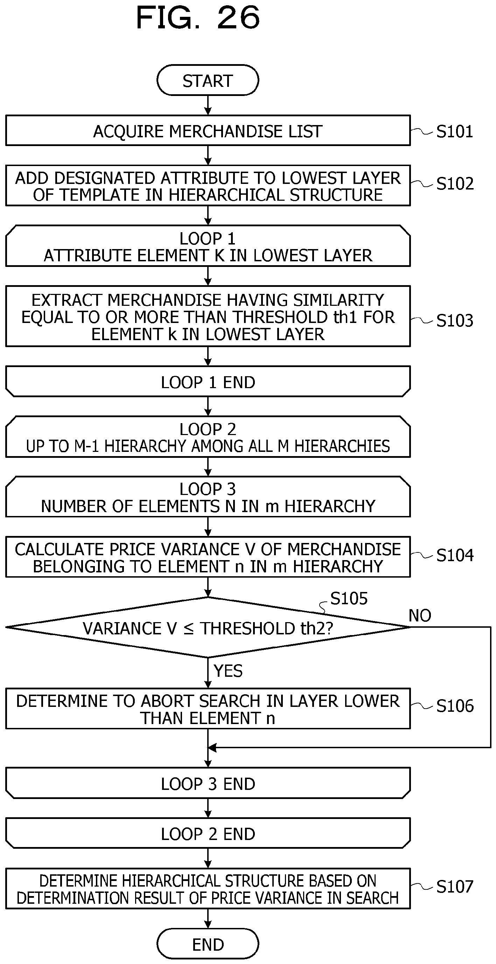

FIG. 26 is a flowchart illustrating a flow of data generation processing according to Embodiment 1. By way of example only, this processing may be started in a case where a request is accepted from the administrator terminal 60 or the like.

As illustrated in FIG. 26, the data generation unit 112 acquires the merchandise list of the store such as a supermarket or a convenience store (step S101). Subsequently, the data generation unit 112 adds the attribute designated by system definition or user definition, for example, an attribute related to "price" or the like to each element in the lowest layer of the template of the hierarchical structure (step S102).

The data generation unit 112 executes loop processing 1 of repeating processing of the following step S103 as many times as the number K of elements in the lowest layer of the hierarchical structure in which the attribute is added to the template in step S102. Although an example in which the processing of step S103 is repeated has been described, the processing of step S103 may be executed in parallel.

For example, the data generation unit 112 extracts, from the merchandise list acquired in step S101, merchandise items each having the similarity equal to or more than the threshold th1 to the element in the lowest layer of the hierarchical structure, for example, the element k of the price attribute (step S103).

As a result of such loop processing 1, the merchandise items belonging to the element k are clustered for each element k of the price attribute.

Thereafter, the data generation unit 112 performs loop processing 2 of repeating processing from the following step S104 to the following step S106 from the first hierarchy to the (M-1) hierarchy excluding the M hierarchy that is the lowest layer among all the M hierarchies in the hierarchical structure after clustering in step S103. The data generation unit 112 executes loop processing 3 of repeating processing from the following step S104 to the following step S106 as many times as the number N of elements in the m hierarchy. Although an example in which the processing from step S104 to step S106 is repeated has been described, the processing from step S104 to step S106 may be executed in parallel.

For example, the data generation unit 112 calculates the price variance V of the merchandise items belonging to the element n in the m hierarchy (step S104). The data generation unit 112 determines whether or not the price variance V is equal to or less than the threshold th2 (step S105).

At this time, in a case where the price variance V is equal to or less than the threshold th2 (Yes in step S105), the data generation unit 112 determines to abort the search for a hierarchy lower than the element n (step S106). In a case where the price variance V is not equal to or less than the threshold th2 (No in step S105), the search for a hierarchy lower than the element n is continued, and thus, the processing in step S106 is skipped.

By such loop processing 2 and loop processing 3, the search is repeated until it is determined to abort the search started for each element in the first hierarchy or until all elements in the (M-1)th hierarchy are searched in the search.

The data generation unit 112 determines the depth of each route in the hierarchical structure based on the determination result of the price variance obtained in the search from step S104 to step S106 (step S107).

The depth of each route in the hierarchical structure of M hierarchies is determined in this manner, and thus, the hierarchical structure is confirmed. The hierarchical structure generated in this manner is stored in the hierarchical structure DB 105 of the storage unit 102.

### (2) Video acquisition processing

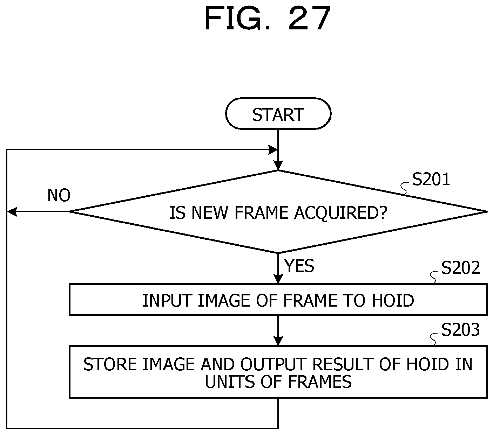

FIG. 27 is a flowchart illustrating a flow of the video acquisition processing according to Embodiment 1. As illustrated in FIG. 27, in a case where image data of a new frame is acquired (Yes in step S201), the video acquisition unit 113 inputs the image data to the first machine learning model 104A, for example, the HOID model, and acquires the output result of the HOID (step S202).

For each frame, the video acquisition unit 113 stores the image data of the frame and the output result of the HOID of the frame in association with each other in the video data DB 106 (step S203), and the processing returns to the processing in step S201.

### (3) First detection processing

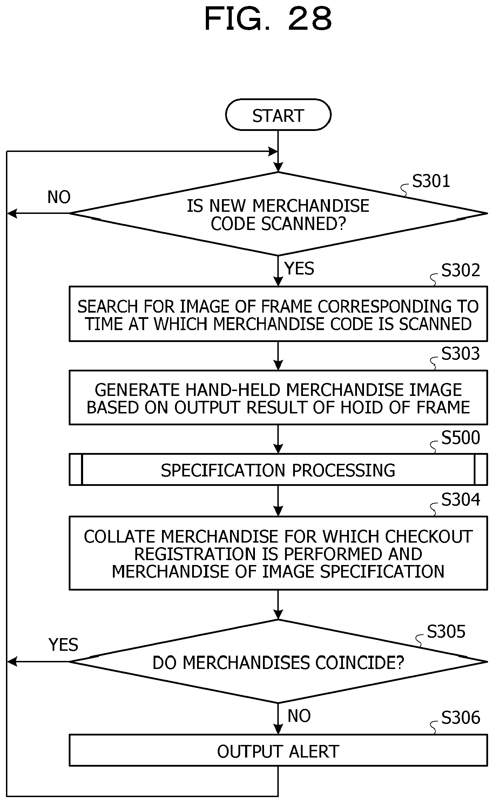

FIG. 28 is a flowchart illustrating a flow of the first detection processing according to Embodiment 1. As illustrated in FIG. 28, in a case where a new merchandise code is acquired through scanning in the self-checkout 50 (Yes in step S301), the first detection unit 116 executes the following processing. For example, the first detection unit 116 searches for a frame corresponding to a time at which the merchandise code is scanned among the frames stored in the video data DB 106 (step S302).

The first detection unit 116 generates the hand-held merchandise image on which the user 2 holds the merchandise based on the output result of the HOID corresponding to the frame matched by the search executed in step S302 (step S303).

Subsequently, the first detection unit 116 executes "specification processing" of specifying the merchandise item by inputting the hand-held merchandise image to the zero-shot image classifier and inputting a list of texts corresponding to the attributes of the merchandises for each of the plurality of hierarchies to the zero-shot image classifier (step S500).

The first detection unit 116 determines whether or not the merchandise item for which the checkout registration is performed through the scanning and the merchandise item specified in step S500 or the merchandise item group included in the upper attribute of the merchandise item coincide with each other (step S304).

At this time, in a case where both the merchandise items do not coincide with each other (No in step S305), the fact that the label switch is performed may be detected. In this case, the alert generation unit 118 generates and outputs the alert of the label switch detected by the first detection unit 116 (step S306), and the processing returns to the processing of step S301. In a case where both the merchandise items coincide with each other (Yes in step S305), the processing of step S306 is skipped and the processing returns to the processing of step S301.

### (4) Second detection processing

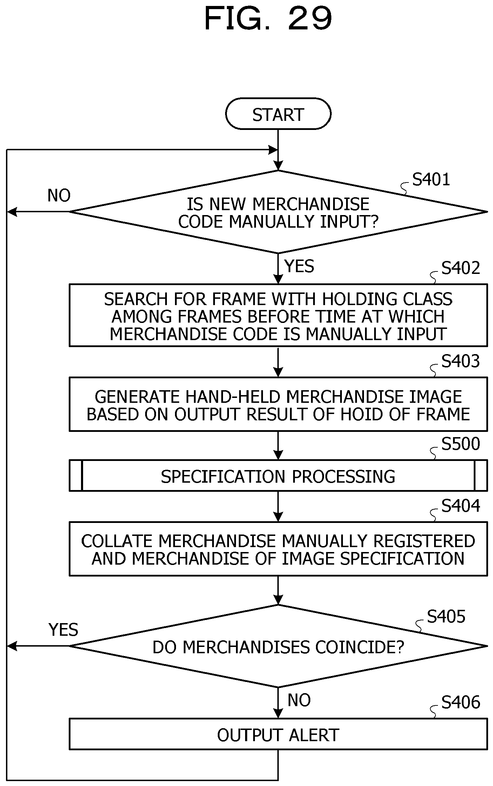

FIG. 29 is a flowchart illustrating a flow of the second detection processing according to Embodiment 1. As illustrated in FIG. 29, in a case where a new merchandise code is acquired through the manual input in the self-checkout 50 (Yes in step S401), the second detection unit 117 executes the following processing. For example, the second detection unit 117 searches for a frame in which the holding class is detected by the latest HOID retroactively from a time at which the merchandise code is manually input among the frames stored in the video data DB 106 (step S402).

The second detection unit 117 generates the hand-held merchandise image of the merchandise without a label based on the output result of the HOID corresponding to the frame matched by the search executed in step S402 (step S403).

Subsequently, the second detection unit 117 executes "specification processing" of specifying the merchandise item by inputting the hand-held merchandise image to the zero-shot image classifier and inputting a list of texts corresponding to the attributes of the merchandises for each of the plurality of hierarchies to the zero-shot image classifier (step S500).

The second detection unit 117 determines whether or not the merchandise item for which the checkout registration is performed through the manual input and the merchandise item specified in step S500 or the merchandise item group included in the upper attribute of the merchandise item coincide with each other (step S404).

At this time, in a case where both the merchandise items do not coincide with each other (No in step S405), the fact that the banana trick is performed may be detected. In this case, the alert generation unit 118 generates and outputs the alert of the banana trick detected by the second detection unit 117 (step S406), and the processing returns to step S401. In a case where both the merchandise items coincide with each other (Yes in step S405), the processing of step S406 is skipped and the processing returns to the processing of step S401.

### (5) Specification processing

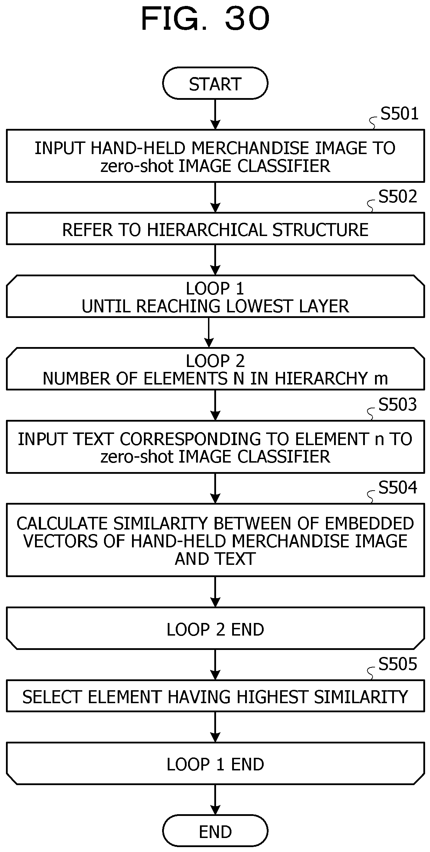

FIG. 30 is a flowchart illustrating a flow of the specification processing according to Embodiment 1. This processing corresponds to the processing of step S500 illustrated in FIG. 28 or step S500 illustrated in FIG. 29. As illustrated in FIG. 30, the unauthorized activity detection unit 115 inputs the hand-held merchandise image generated in step S303 or step S403 to the image encoder 10I of the zero-shot image classifier (step S501). Thereafter, the unauthorized activity detection unit 115 refers to the hierarchical structure stored in the hierarchical structure DB 105 (step S502).

The unauthorized activity detection unit 115 executes loop processing 1 of repeating processing from the following step S502 to the following step S503 from the uppermost layer to the lowermost layer in the hierarchical structure referred to in the step S505. Although an example in which the processing from step S503 to step S505 is distributed has been described, the processing from step S503 to step S505 may be executed in parallel.

The unauthorized activity detection unit 115 executes loop processing 2 of repeating processing of the following step S503 and the following step S504 as many times as the number N of elements in the m hierarchy. Although an example in which the processing of step S503 and step S504 is distributed has been described, the processing of step S503 and step S504 may be executed in parallel.

For example, the unauthorized activity detection unit 115 inputs the text corresponding to the element n in the m hierarchy to the text encoder 10T of the zero-shot image classifier (step S503). The unauthorized activity detection unit 115 calculates the similarities between the vector output by the image encoder 10I to which the hand-held merchandise image is input in step S501 and the vector output by the text encoder 10T to which the text is input in step S503 (step S504).

As a result of such loop processing 2, a similarity matrix between N elements in the m hierarchy and the hand-held merchandise image is generated. The unauthorized activity detection unit 115 selects an element having a highest similarity among the similarity matrix of the N elements in the m hierarchy and the hand-held merchandise image (step S505).

Thereafter, the unauthorized activity detection unit 115 repeats loop processing 1 for N elements belonging to a lower layer than the element selected in step S505 in the immediately lower layer to which the loop counter m in the hierarchy is incremented by one.

As a result of such loop processing 1, the text output by the zero-shot image classifier when the text corresponding to the element in the lowest layer of the hierarchical structure is input is obtained as a result of specifying the merchandise item.

### <4. One aspect of effect>

As described above, the information processing apparatus 100 acquires the video including the object. The information processing apparatus 100 inputs the acquired video to the machine learning model (zero-shot image classifier) that refers to reference source data in which the attribute of the object is associated with each of the plurality of hierarchies. Accordingly, the attribute of the object included in the video is specified from among the attributes of the objects in the first hierarchy (melon and apple). Thereafter, the information processing apparatus 100 specifies the attribute of the object in the second hierarchy (expensive melon and inexpensive melon) under the first hierarchy by using the specified attribute of the object. The information processing apparatus 100 specifies the attribute of the object included in the video from the attributes of the objects in the second hierarchy by inputting the acquired video to the machine learning model (zero-shot image classifier).

Accordingly, according to the information processing apparatus 100, the detection of the unauthorized activity in the self-checkout may be implemented by using the machine learning model (zero-shot image classifier) that does not have to prepare a large amount of training data and does not have to retune in accordance with the life cycle of the merchandise.

The information processing apparatus 100 acquires the video of the person who scans the code of the merchandise in the self-checkout 50. The acquired video is input to the machine learning model (zero-shot image classifier), and thus, the information processing apparatus 100 specifies the merchandise candidate corresponding to the merchandise included in the video from among the plurality of preset merchandise candidates (texts). Thereafter, the information processing apparatus 100 acquires the item of the merchandise identified by the self-checkout 50 by causing the self-checkout 50 to scan the code of the merchandise. The information processing apparatus 100 generates an alert indicating an abnormality of the merchandise registered in the self-checkout 50 based on the item of the specified merchandise candidate and the item of the merchandise acquired from the self-checkout 50.

According to the information processing apparatus 100, as one aspect, since the alert may be output when the label switch in the self-checkout 50 is detected, the label switch in the self-checkout 50 may be suppressed.

The information processing apparatus 100 acquires the video of the person who holds the merchandise registered in the self-checkout 50. The acquired video is input to the machine learning model (zero-shot image classifier), and thus, the information processing apparatus 100 specifies the merchandise candidate corresponding to the merchandise included in the video from among the plurality of preset merchandise candidates (texts). Thereafter, the information processing apparatus 100 acquires the item of the merchandise input by the person from the plurality of merchandise candidates output by the self-checkout 50. The information processing apparatus 100 generates an alert indicating an abnormality of the merchandise registered in the self-checkout 50 based on the acquired item of the merchandise and the specified merchandise candidate.

According to the information processing apparatus 100, as one aspect, since the alert may be output when the banana trick is detected in the self-checkout 50, the banana trick in the self-checkout 50 may be suppressed.

The information processing apparatus 100 acquires the merchandise data, and generates the reference source data in which the attribute of the merchandise is associated with each of the plurality of hierarchies based on a distribution relationship of the attribute of the merchandise included in the acquired merchandise data. The information processing apparatus 100 sets the generated reference source data as the reference data to be referred to by the zero-shot image classifier.

Accordingly, according to the information processing apparatus 100, the number of pieces of data referred to by the zero-shot image classifier used for detecting the unauthorized activity in the self-checkout 50 may be reduced.

### [Embodiment 2]

### <5. Application Examples>

Although the embodiment related to the apparatus of the disclosure has been described hitherto, the present disclosure may be executed in various different forms other than the above-described embodiment. Hereinafter, application examples and adoption examples included in the present disclosure will be described.

### <5-1. Application Example 1>

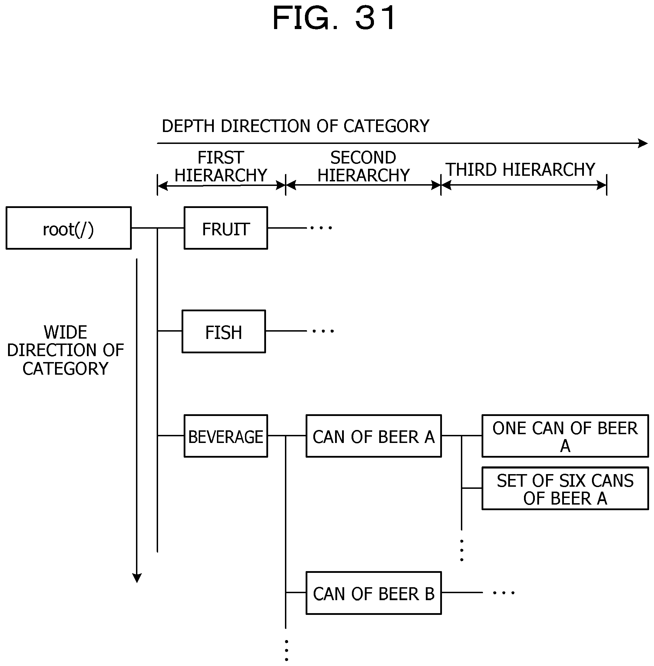

First, Application Example 1 of the hierarchical structure described in Embodiment 1 described above will be described. For example, the hierarchical structure may include the number of merchandises and a label in units of the number of merchandises in addition to the attribute of the merchandise. FIG. 31 is a diagram illustrating Application Example 1 of the hierarchical structure. For the sake of convenience in description, in FIG. 31, lower elements belonging to a large classification "beverage" of the merchandise are extracted for the second hierarchy and subsequent hierarchies, and lower elements belonging to a small classification "can of beer A" of the merchandise are extracted for the third hierarchy and subsequent hierarchies.

As illustrated in FIG. 31, the hierarchical structure according to Application Example 1 includes a first hierarchy, a second hierarchy, and a third hierarchy. Among these hierarchies, elements such as "fruit", "fish", and "beverage" are included in the first hierarchy as an example of the large classification of the merchandise. Elements such as "can of beer A" and "can of beer B" are included in the second hierarchy as another example of the small classification of the merchandise. Elements such as "one can of beer A" and "set of six cans of beer A" are included as the example of the label including the number and unit of the merchandise in the third hierarchy.

In a case where the number of merchandises and the label in units of the number of merchandises are included in the hierarchical structure in this manner, the detection of the unauthorized activity of performing a smaller number of scans than an actual number of purchases with the label switch in addition to the above-described label switch may be implemented. Hereinafter, the unauthorized activity of performing the smaller number of scans than the actual number of purchases by the label switch is referred to as "label switch (number)" in some cases.

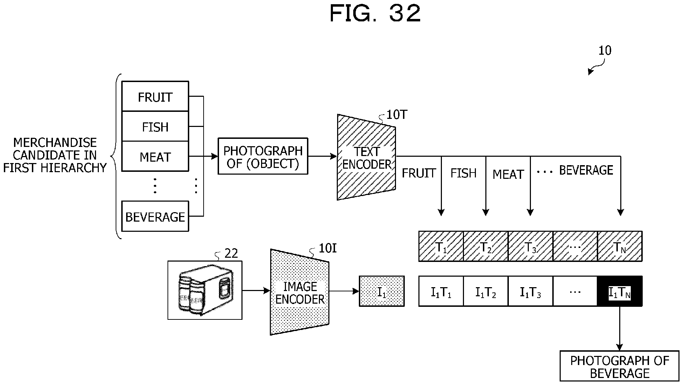

The specification of the merchandise item executed when such label switch (number) is detected will be described by using a case. FIGs. 32 to 34 are schematic diagrams (1) to (3) illustrating a case 3 of specifying the merchandise item. FIGs. 32 to 34 illustrate an example in which a partial image of Bbox corresponding to the merchandise item "set of six cans of beer A" held by the user 2 is generated by way of example only of a hand-held merchandise image 22.

As illustrated in FIG. 32, the hand-held merchandise image 22 is input to the image encoder 10I of the CLIP model 10. As a result, the image encoder 10I outputs the embedded vector I₁ of the hand-held merchandise image 22.

In the text encoder 10T of the CLIP model 10, the texts "fruit", "fish", "meat", and "beverage" corresponding to the elements in the first hierarchy are input as the list of class captions in accordance with the hierarchical structure illustrated in FIG. 31. It goes without saying that "Prompt Engineering" may be performed as in the example illustrated in FIG. 17 when the text is input.

As a result, the text encoder 10T outputs an embedded vector T₁ of the text "fruit", an embedded vector T₂ of the text "fish", an embedded vector T₃ of the text "meat", ..., and an embedded vector T_{N} of the text "beverage".

Similarities are calculated between the embedded vector I₁ of the hand-held merchandise image 22, the embedded vector T₁ of the text "fruit", the embedded vector T₂ of the text "fish", the embedded vector T₃ of the text "meat", and the embedded vector T_{N} of the text "beverage".

As illustrated in black and white inverted display in FIG. 32, in the present example, the similarity between the embedded vector I₁ of the hand-held merchandise image 22 and the embedded vector T_{N} of the text "beverage" is maximized. Thus, the CLIP model 10 outputs "beverage" as a prediction result of the class of the hand-held merchandise image 22.

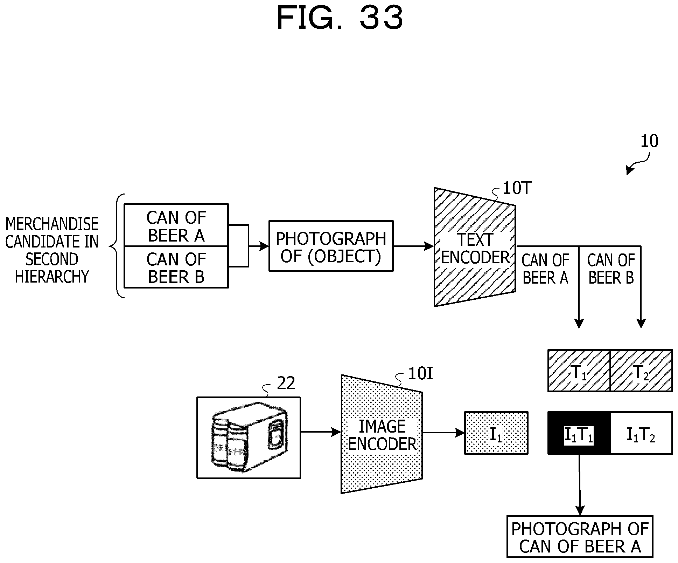

Since the prediction result "beverage" in the first hierarchy obtained in this manner is not the terminal node in the hierarchical structure illustrated in FIG. 31, the inference of the CLIP model 10 is continued. For example, as illustrated in FIG. 33, the texts "can of beer A" and "can of beer B" corresponding to the elements in the second hierarchy belonging to a lower layer of the prediction result "beverage" in the first hierarchy are input as the list of class captions in accordance with the hierarchical structure illustrated in FIG. 31. It goes without saying that "Prompt Engineering" may be performed as in the example illustrated in FIG. 17 when the text is input.

As a result, the text encoder 10T outputs the embedded vector T₁ of the text "can of beer A" and the embedded vector T₂ of the text "can of beer B". Similarities are calculated between the embedded vector I₁ of the hand-held merchandise image 22, the embedded vector T₁ of the text "can of beer A", and the embedded vector T₂ of the text "can of beer B".

As illustrated in black and white inverted display in FIG. 33, in the present example, the similarity between the embedded vector I₁ of the hand-held merchandise image 22 and the embedded vector T₁ of the text "can of beer A" is maximized. Thus, the CLIP model 10 outputs "can of beer A" as a prediction result of the class of the hand-held merchandise image 22.

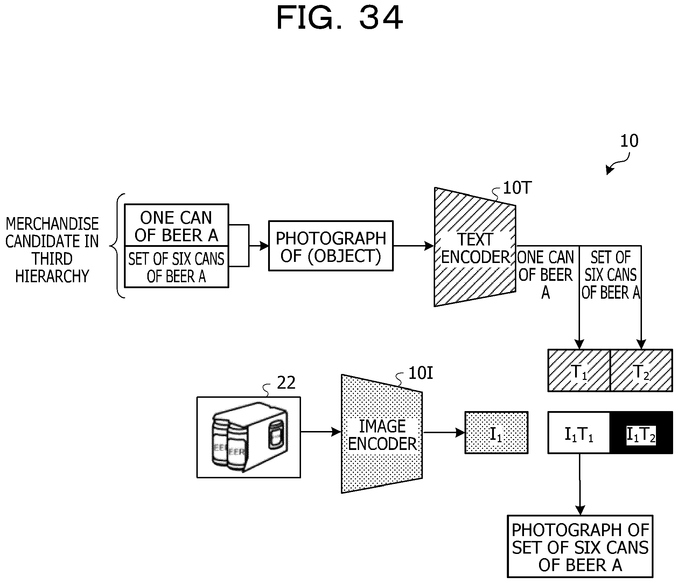

Since the prediction result "can of beer A" in the second hierarchy obtained in this manner is not the terminal node in the hierarchical structure illustrated in FIG. 31, the inference of the CLIP model 10 is continued. For example, as illustrated in FIG. 34, the texts "one can of beer A" and "set of six cans of beer A" corresponding to the elements in the third hierarchy belonging to a lower layer of the prediction result "can of beer A" in the second hierarchy are input as the list of class captions in accordance with the hierarchical structure illustrated in FIG. 31.

As a result, the text encoder 10T outputs the embedded vector T₁ of the text "one can of beer A" and the embedded vector T₂ of the text "set of six cans of beer A". Similarities are calculated between the embedded vector I₁ of the hand-held merchandise image 22, the embedded vector T₁ of the text "one can of beer A", and the embedded vector T₂ of the text "set of six cans of beer A".

As illustrated in black and white inverted display in FIG. 34, in the present example, the similarity between the embedded vector I₁ of the hand-held merchandise image 22 and the embedded vector T₁ of the text "set of six cans of beer A" is maximized. Thus, the CLIP model 10 outputs "set of six cans of beer A" as a prediction result of the class of the hand-held merchandise image 22.

By the above narrowing-down, the fact that the merchandise item included in the hand-held merchandise image 22 is "can of beer A" may be specified, and the fact that the number of merchandise items is "six" may be specified. From an aspect of using this fact, the first detection unit 116 performs the following determination in addition to the determination of the label switch described above. For example, the first detection unit 116 determines whether or not the number of merchandise items for which the checkout registration is performed through the scanning is less than the number of merchandise items specified by the image analysis of the zero-shot image classifier. At this time, in a case where the number of merchandise items for which the checkout registration is performed through the scanning is less than the number of merchandise items specified by the image analysis, the unauthorized activity of performing the smaller number of scans than the actual number of purchases by the label switch may be detected.

In a case where the unauthorized activity of cheating the number of purchases is detected in this manner, the alert generation unit 118 may generate an alert for the user 2 in a case where the label switch (number) is detected by the first detection unit 116. The number of merchandise items for which the checkout registration is performed and the number of merchandise items specified by the image analysis of the zero-shot image classifier may be included as such an alert for the user 2.

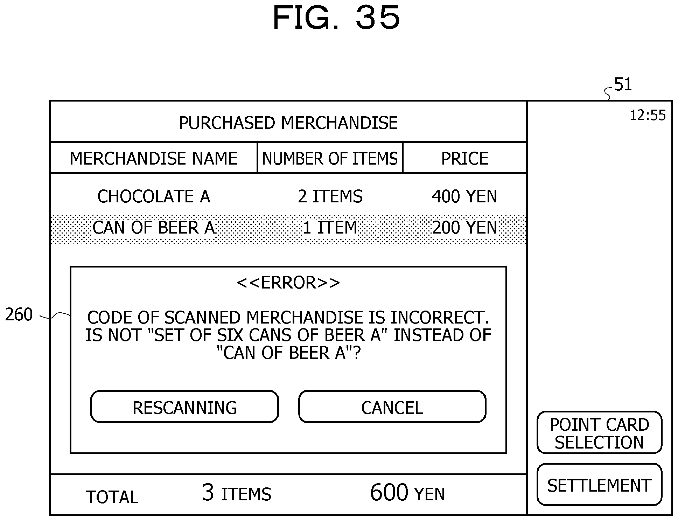

FIG. 35 is a diagram (5) illustrating the display example of the alert. FIG. 35 illustrates an alert displayed on the self-checkout 50 when the first detection unit 116 detects the unauthorized activity of cheating the number of purchases. As illustrated in FIG. 35, an alert window 260 is displayed on the touch panel 51 of the self-checkout 50. The number "can of beer A" of the merchandise item for which the checkout registration is performed through the scanning and the number "set of six cans of beer A" of the merchandise item specified by the image analysis of the zero-shot image classifier are displayed in the alert window 260 in a state where these numbers are compared with each other. Alternatively, the alert window 260 may include a notification that prompts the user to perform scanning again. According to the display of such an alert window 260, the user may be warned against the detection of the label switch (number) of cheating the number of purchases by performing scanning a label of "set of six cans of beer A" replaced with a label of "can of beer A". Thus, as a result of being able to prompt cancellation of settlement while the number of purchases remains incorrect, damage to the store due to the label switch (number) may be suppressed.

As another aspect, in a case where the label switch (number) is detected by the first detection unit 116, the alert generation unit 118 may generate the alert for the person related to the store, for example, the administrator. A type of the unauthorized activity, identification information of the self-checkout 50 in which the unauthorized activity is detected, a damage estimated amount due to the unauthorized activity, and the like may be included as such an alert for the administrator of the store.

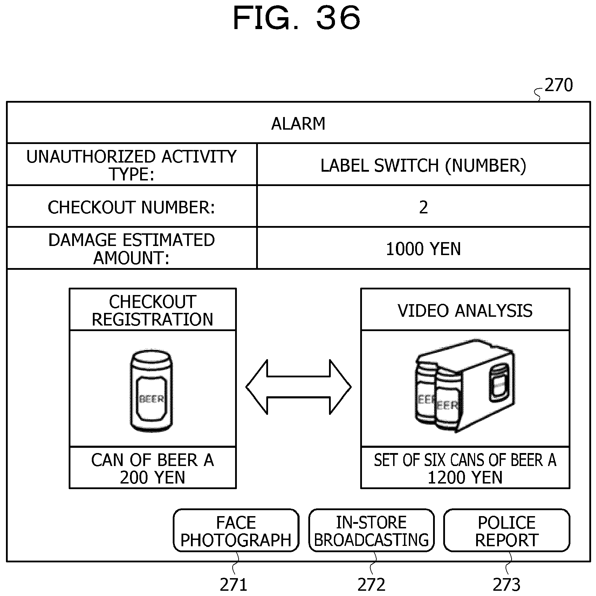

FIG. 36 is a diagram (6) illustrating the display example of the alert. FIG. 36 illustrates an alert displayed on the display unit of the administrator terminal 60 when the first detection unit 116 detects the unauthorized activity of cheating the number of purchases. As illustrated in FIG. 36, an alert window 270 is displayed on the display unit of the administrator terminal 60. The number "can of beer A" and the price "200 yen" of the merchandise item for which the checkout registration is performed through the scanning and the number "set of six cans of beer A" and the price "1200 yen" of the merchandise item specified by the image analysis are displayed in the alert window 270 in a state where the numbers and the prices may be compared with each other. The alert window 270 displays the unauthorized activity type "label switch (number)" in which the number of purchases is cheated with the label of "set of six cans of beer A" replaced with the label of "can of beer A", the checkout number "2" where the label switch (number) occurs, and the damage estimated amount "1000 yen (= 1200 yen - 200 yen)" caused by the settlement by the label switch (number). Alternatively, the alert window 270 displays GUI components 271 to 273 for accepting requests such as display of a face photograph obtained by capturing the face or the like of the user 2 who uses the self-checkout 50 with the checkout number "2", in-store broadcasting, and notification to the police or the like. According to the display of such an alert window 270, the notification of the occurrence of the damage by the label switch (number), grasping a degree of damage, and presentation of various measures against the damage. Thus, as a result of being able to prompt the user 2 to cope with the label switch (number), damage to the store caused by the label switch (number) may be suppressed.

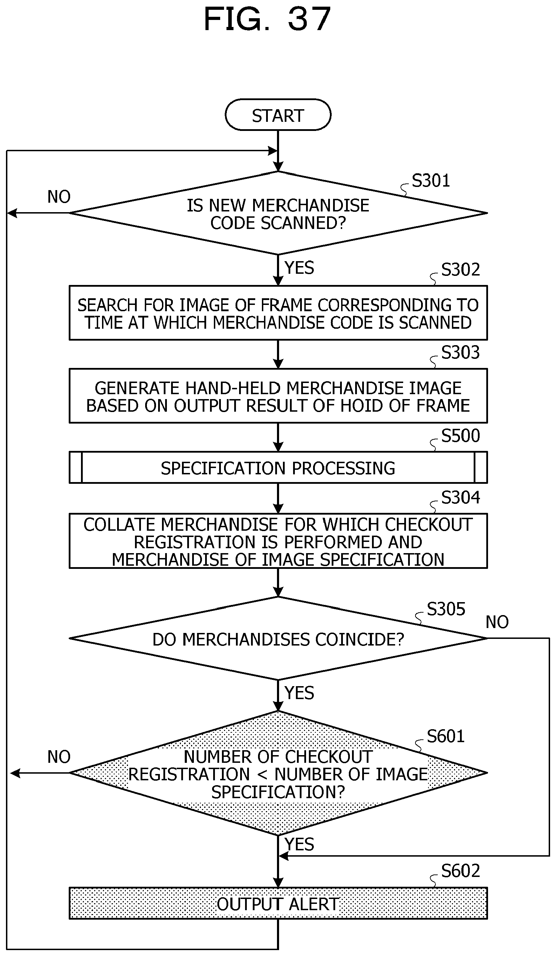

Next, processing of detecting the above-described label switch (number) will be described. FIG. 37 is a flowchart illustrating a flow of first detection processing according to Application Example 1. In FIG. 37, an identical step number is assigned to a step in which processing identical to the processing in the flowchart illustrated in FIG. 28 is executed, while different step numbers are assigned to steps in which processing changed in Application Example 1 is executed.

As illustrated in FIG. 37, from step S301 to step S305, processing similar to the processing in the flowchart illustrated in FIG. 28 is executed, but processing subsequent to the processing executed at the branch of No in step S305 is different.

For example, in a case where the merchandise items coincide with each other (Yes in step S305), the first detection unit 116 determines whether or not the number of merchandise items for which the checkout registration is performed through the scanning is less than the number of merchandise items specified by the image analysis (step S601).

In a case where the number of merchandise items for which the checkout registration is performed through the scanning is less than the number of merchandise items specified by the image analysis (Yes in step S601), the label switch (number) of performing the smaller number of scans than the actual number of purchases by the label switch may be detected. In this case, the alert generation unit 118 generates and outputs the alert of the label switch (number) detected by the first detection unit 116 (step S602), and the processing returns to the processing of step S301.

As described above, the first detection processing is executed in accordance with the hierarchical structure according to Application Example 1, and thus, the detection of the label switch (number) may be implemented.

### <5-2. Application Example 2>

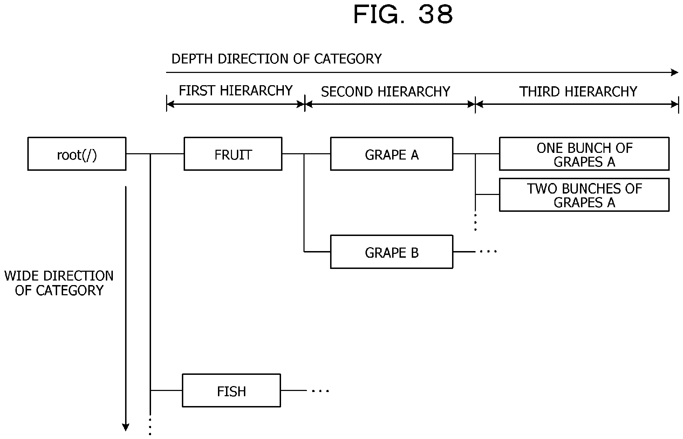

In addition to Application Example 1 described above, a hierarchical structure according to Application Example 2 will be described as another example of the hierarchical structure including the number of merchandises and the element of the label in unit of the number. FIG. 38 is a diagram illustrating Application Example 2 of the hierarchical structure. For the sake of convenience in description, in FIG. 38, lower elements belonging to the large classification "fruit" of the merchandise are extracted for the second hierarchy and subsequent hierarchies, and lower elements belonging to the small classification "grape A" of the merchandise are extracted for the third hierarchy and subsequent hierarchies.

As illustrated in FIG. 38, the hierarchical structure according to Application Example 2 includes a first hierarchy, a second hierarchy, and a third hierarchy. Among these hierarchies, elements such as "fruit" and "fish" are included in the first hierarchy as an example of the large classification of the merchandise. Elements such as "grape A" and "grape B" are included in the second hierarchy as another example of the small classification of the merchandise. Elements such as "one bunch of grapes A" and "two bunches of grapes A" are included as the example of the label including the number and unit of the merchandise in the third hierarchy.

In a case where the number of merchandises and the label in unit of the number of merchandises are included in the hierarchical structure in this manner, the detection of the unauthorized activity of performing a smaller number of manual inputs than the actual number of purchases by the banana trick may be implemented in addition to the above-described banana trick. Hereinafter, the unauthorized activity of performing the smaller number of manual inputs than the actual number of purchases by the banana trick is referred to as "banana trick (number)" in some cases.

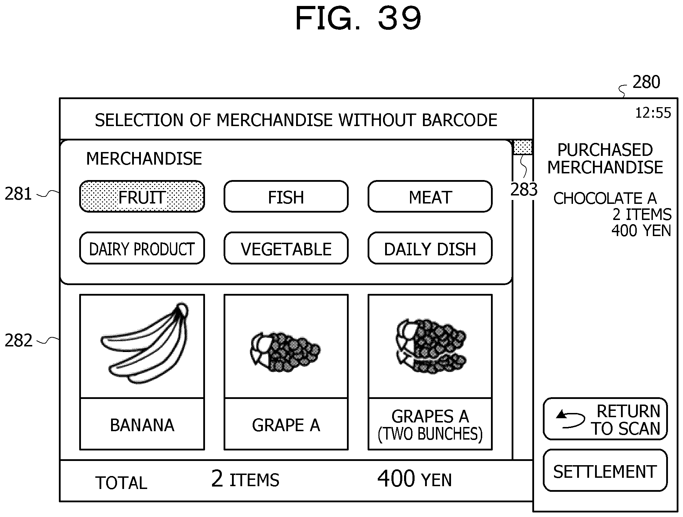

The checkout registration for a merchandise without a label in this manner is performed by manual input of the user 2. By way of example only, the self-checkout 50 accepts checkout registration of a merchandise without a label through an operation on a selection screen for a merchandise without a code illustrated in FIG. 39 in some cases.

FIG. 39 is a diagram (3) illustrating the display example of the self-checkout. As illustrated in FIG. 39, a selection screen 280 for the merchandise without a code may include a display area 281 for the category of the merchandise and a display area 282 for the merchandise item belonging to the category being selected. For example, an example in which the category "fruit" of the merchandise is being selected from among the categories "fruit", "fish", "meat", "dairy product", "vegetable", and "daily dish" of the merchandises included in the display area 281 is illustrated on the selection screen 280 for the merchandise without a code illustrated in FIG. 39. In this case, the merchandise items such as "banana", "grape A", and "grape A (two bunches)" belonging to the category "fruit" of the merchandise are displayed in the display area 282. In a case where there is no space for disposing all the merchandise items belonging to the category "fruit" of the merchandise in the display area 282, a range in which the merchandise items are disposed may be widened by scrolling a display range of the display area 282 via a scroll bar 283. A selection operation from among the merchandise items displayed in such a display area 282 is accepted, and thus, the checkout registration of the merchandise without a label may be accepted.

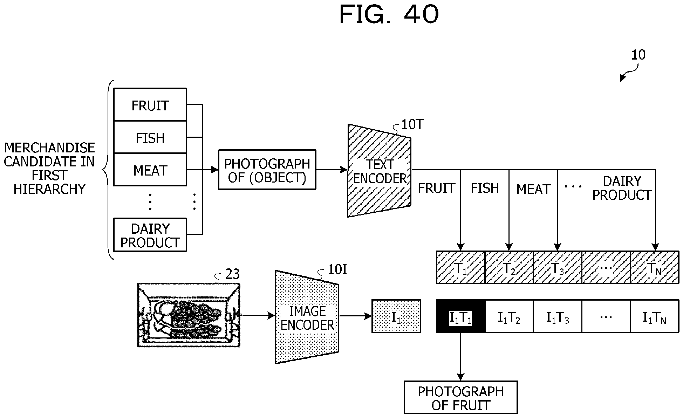

The specification of the merchandise item executed when such a banana trick (number) is detected will be described by using a case. FIGs. 40 to 42 are schematic diagrams (1) to (3) illustrating a case 4 of specifying the merchandise item. FIGs. 40 to 42 illustrate an example in which a partial image of Bbox corresponding to the merchandise item "two bunches of grapes A" held by the user 2 is generated by way of example only of a hand-held merchandise image 23.

As illustrated in FIG. 40, the hand-held merchandise image 23 is input to the image encoder 10I of the CLIP model 10. As a result, the image encoder 10I outputs the embedded vector I₁ of the hand-held merchandise image 23.

In the text encoder 10T of the CLIP model 10, the texts "fruit", "fish", "meat", and "dairy product" corresponding to the elements in the first hierarchy are input as the list of class captions in accordance with the hierarchical structure illustrated in FIG. 38. It goes without saying that "Prompt Engineering" may be performed as in the example illustrated in FIG. 17 when the text is input.

As a result, the text encoder 10T outputs an embedded vector T₁ of the text "fruit", an embedded vector T₂ of the text "fish", an embedded vector T₃ of the text "meat", ..., and an embedded vector T_{N} of the text "dairy product".

Similarities are calculated between the embedded vector I₁ of the hand-held merchandise image 23, the embedded vector T₁ of the text "fruit", the embedded vector T₂ of the text "fish", the embedded vector T₃ of the text "meat", and the embedded vector T_{N} of the text "dairy product".

As illustrated in black and white inverted display in FIG. 40, in the present example, the similarity between the embedded vector I₁ of the hand-held merchandise image 23 and the embedded vector T₁ of the text "fruit" is maximized. Thus, the CLIP model 10 outputs "fruit" as a prediction result of the class of the hand-held merchandise image 23.

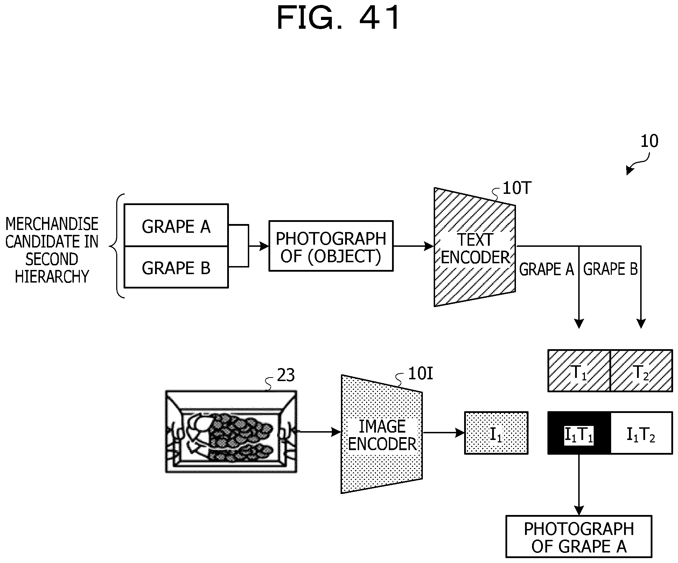

Since the prediction result "fruit" in the first hierarchy obtained in this manner is not the terminal node in the hierarchical structure illustrated in FIG. 38, the inference of the CLIP model 10 is continued. For example, as illustrated in FIG. 41, the texts "grape A" and "grape B" corresponding to the elements in the second hierarchy belonging to a lower layer of the prediction result "fruit" in the first hierarchy are input as the list of class captions in accordance with the hierarchical structure illustrated in FIG. 38. It goes without saying that "Prompt Engineering" may be performed as in the example illustrated in FIG. 17 when the text is input.

As a result, the text encoder 10T outputs the embedded vector T₁ of the text "grape A" and the embedded vector T₂ of the text "grape B". Similarities are calculated between the embedded vector I₁ of the hand-held merchandise image 23, the embedded vector T₁ of the text "grape A", and the embedded vector T₂ of the text "grape B".

As illustrated in black and white inverted display in FIG. 41, in the present example, the similarity between the embedded vector I₁ of the hand-held merchandise image 23 and the embedded vector T₁ of the text "grape A" is maximized. Thus, the CLIP model 10 outputs "grape A" as a prediction result of the class of the hand-held merchandise image 23.

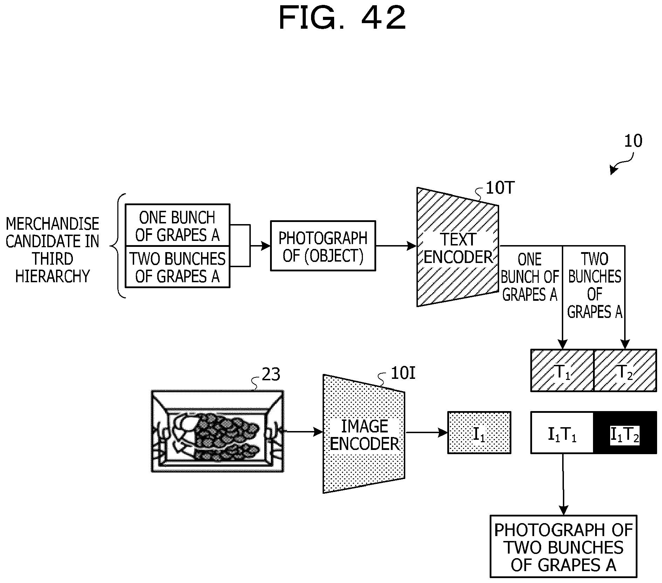

Since the prediction result "grape A" in the second hierarchy obtained in this manner is not the terminal node in the hierarchical structure illustrated in FIG. 38, the inference of the CLIP model 10 is continued. For example, as illustrated in FIG. 42, the texts "one bunch of grapes A" and "two bunches of grapes A" corresponding to the elements in the third hierarchy belonging to the lower layer of the prediction result "grape A" in the second hierarchy are input as the list of class captions in accordance with the hierarchical structure illustrated in FIG. 38.

As a result, the text encoder 10T outputs the embedded vector T₁ of the text "one bunch of grapes A" and the embedded vector T₂ of the text "two bunches of grapes A". Similarities are calculated between the embedded vector I₁ of the hand-held merchandise image 22, the embedded vector T₁ of the text "one bunch of grapes A", and the embedded vector T₂ of the text "two bunches of grapes A".

As illustrated in black and white inverted display in FIG. 42, in the present example, the similarity between the embedded vector I₁ of the hand-held merchandise image 23 and the embedded vector T₂ of the text "two bunch of grapes A" is maximized. Thus, the CLIP model 10 outputs "two bunches of grapes A" as a prediction result of the class of the hand-held merchandise image 23.

By the above narrowing-down, the fact that the merchandise item included in the hand-held merchandise image 23 is "two bunches of grapes A" may be specified, and the fact that the number of the merchandise items is "two bunches" may be specified. From an aspect of using this fact, the second detection unit 117 performs the following determination in addition to the determination of the banana trick described above. For example, the second detection unit 117 determines whether or not the number of merchandise items for which the checkout registration is performed through the manual input is less than the number of merchandise items specified by the image analysis of the zero-shot image classifier. At this time, in a case where the number of merchandise items for which the checkout registration is performed through the manual input is less than the number of merchandise items specified by the image analysis, the unauthorized activity of performing the smaller number of manual inputs than the actual number of purchases by the banana trick may be detected.

In a case where the unauthorized activity of cheating the number of purchases is detected in this manner, the alert generation unit 118 may generate an alert for the user 2 in a case where the banana trick (number) is detected by the second detection unit 117. The number of merchandise items for which the checkout registration is performed and the number of merchandise items specified by the image analysis of the zero-shot image classifier may be included as such an alert for the user 2.

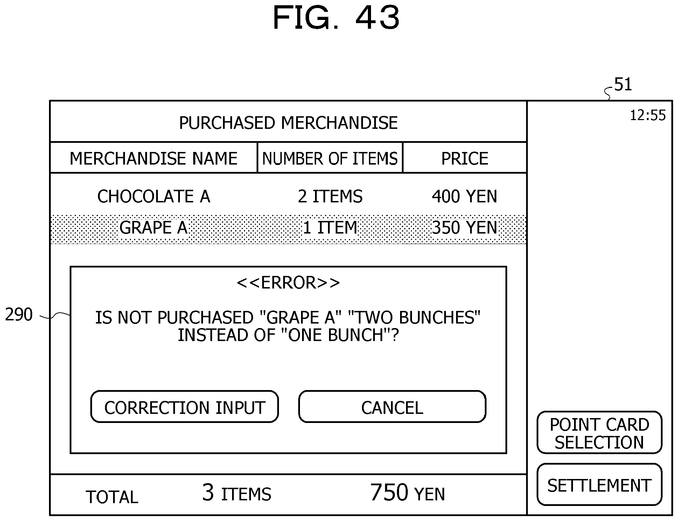

FIG. 43 is a diagram (7) illustrating the display example of the alert. FIG. 43 illustrates an alert displayed on the self-checkout 50 when the second detection unit 117 detects the unauthorized activity of cheating the number of purchases. As illustrated in FIG. 43, an alert window 290 is displayed on the touch panel 51 of the self-checkout 50. The number "grape A" of the merchandise item for which the checkout registration is performed through the manual input and the number "two bunch of grapes A" of the merchandise item specified by the image analysis are displayed in the alert window 290 in a state where the numbers may be compared with each other. Alternatively, the alert window 290 may include a notification that prompts the user to perform the manual input again. According to the display of such an alert window 290, the user may be warned against the detection of the banana trick (number) of cheating the manual input of the number of purchases for "grape A" as "one bunch" instead of "two bunches". Thus, as a result of being able to prompt cancellation of settlement while the number of purchases remains incorrect, damage to the store due to the banana trick (number) may be suppressed.

As another aspect, in a case where the banana trick (number) is detected by the second detection unit 117, the alert generation unit 118 may generate the alert for the person related to the store, for example, the administrator. A type of the unauthorized activity, identification information of the self-checkout 50 in which the unauthorized activity is detected, a damage estimated amount due to the unauthorized activity, and the like may be included as such an alert for the administrator of the store.

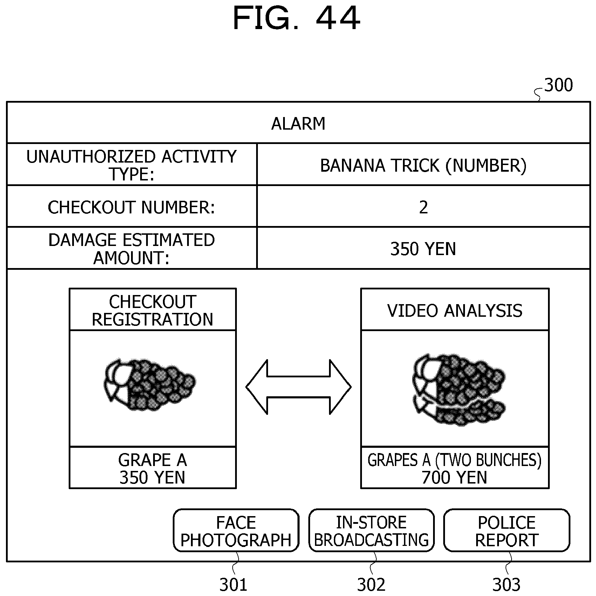

FIG. 44 is a diagram (8) illustrating the display example of the alert. FIG. 44 illustrates an alert displayed on the display unit of the administrator terminal 60 when the second detection unit 117 detects the unauthorized activity of cheating the number of purchases. As illustrated in FIG. 44, an alert window 300 is displayed on the display unit of the administrator terminal 60. The number "grape A" and the price "350 yen" of the merchandise item for which the checkout registration is performed through the manual input and the number "two bunches of grapes A" and the price "700 yen" of the merchandise item specified by the image analysis are displayed in the alert window 300 in a state where these numbers and prices may be compared with each other. The alert window 300 displays the unauthorized activity type "banana trick (number)" in which the manual input of the number of purchases of "grape A" is cheated with "one bunch" instead of "two bunches", the checkout number "2" where the banana trick (number) occurs, and the damage estimated amount "350 yen (= 700 yen - 350 yen)" caused by the settlement by the banana trick (number). Alternatively, the alert window 300 displays, for example, GUI components 301 to 303 for accepting requests such as display of a face photograph obtained by capturing the face or the like of the user 2 who uses the self-checkout 50 with the checkout number "2", in-store broadcasting, and notification to the police or the like. According to the display of such an alert window 300, the notification of the occurrence of the damage of the banana trick (the number of bananas), grasping a degree of damage, and presentation of various measures against the damage. Thus, as a result of being able to prompt the user 2 to cope with the banana trick (number), damage to the store caused by the banana trick (number) may be suppressed.

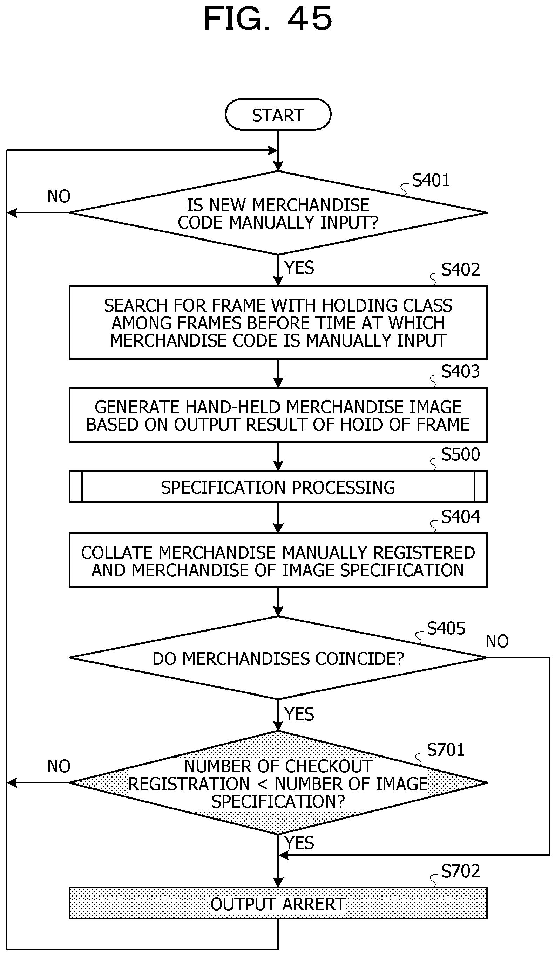

Next, processing of detecting the above-described banana trick (number) will be described. FIG. 45 is a flowchart illustrating a flow of second detection processing according to Application Example 2. In FIG. 45, an identical step number is assigned to a step in which processing identical to the processing in the flowchart illustrated in FIG. 29 is executed, while different step numbers are assigned to steps in which processing changed in Application Example 2 is executed.

As illustrated in FIG. 45, from step S401 to step S405, processing similar to the processing in the flowchart illustrated in FIG. 29 is executed, but processing subsequent to the processing executed at the branch of No in step S405 is different.

For example, in a case where the merchandise items coincide with each other (Yes in step S405), the second detection unit 117 determines whether or not the number of merchandise items for which the checkout registration is performed through the manual input is less than the number of merchandise items specified by the image analysis (step S701).

In a case where the number of merchandise items for which the checkout registration is performed through the manual input is less than the number of merchandise items specified by the image analysis (Yes in step S701), the following possibility increases. For example, the banana trick (number) in which the smaller number of manual inputs than the number of actual purchases are performed by the banana trick may be detected. In this case, the alert generation unit 118 generates and outputs an alert of the banana trick (number) detected by the second detection unit 117 (step S702), and the processing returns to the processing of step S401.

As described above, the second detection processing is executed in accordance with the hierarchical structure according to Application Example 2, and thus, the detection of the banana trick (number) may be implemented.

### <5-3. Application Example 3>

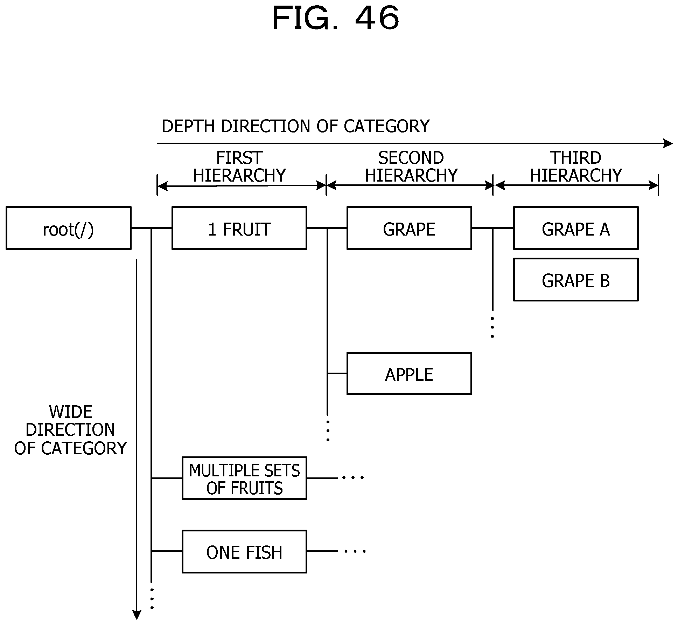

Although an example in which the number of merchandises and the element of the label in unit of the number of merchandises are included in the third hierarchy has been described in Application Example 1 described above and Application Example 2 described above, the number of merchandises or the element of the label in unit of the number of merchandises may be included in any hierarchy. FIG. 46 is a diagram illustrating Application Example 3 of the hierarchical structure. FIG. 46 illustrates an example in which the number of merchandises and the element of the label in unit of the number of merchandises are included in the first hierarchy.

As illustrated in FIG. 46, the hierarchical structure according to Application Example 3 includes a first hierarchy, a second hierarchy, and a third hierarchy. Among these hierarchies, elements such as "one fruit" and "a plurality of fruit" are included as the example of the label including the number and unit of the merchandise and the large classification of the merchandise in the first hierarchy. Elements such as "grape" and "apple" are included as another example of the small classification of the merchandise in the second hierarchy. Elements such as "grape A" and "grape B" are included as the examples of the merchandise items in the third hierarchy.

As described above, even in a case where the number of merchandises and the label in unit of the number of merchandises are included in any hierarchy, the unauthorized activity of cheating the number of purchases such as the label switch (number) described above or the banana trick (number) described above may be detected.

### <5-4. Application Example 4>

Although an example in which the price attribute is added to the template in addition to the category (large classification or small classification) has been described as an example of the attribute of the merchandise in Embodiment 1 described above, the attribute of the merchandise is not limited thereto. For example, an attribute such as "color" or "shape" may be added to the template from an aspect of improving the accuracy of embedding the text of the class caption of the zero-shot image classifier in the feature space. Alternatively, an attribute such as "inventory quantity" may be added to the template from the viewpoint of suppressing an inventory shortage in the store.

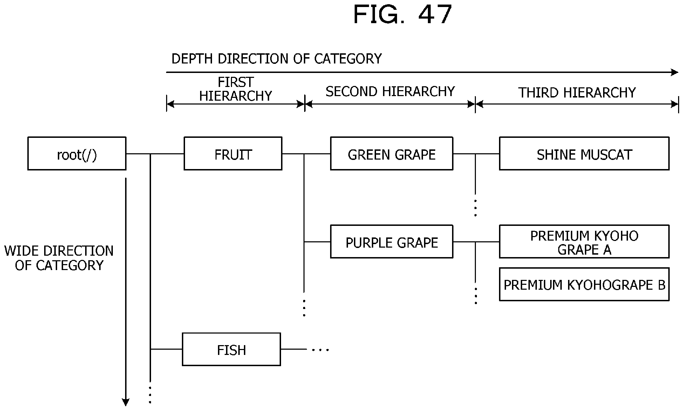

FIG. 47 is a diagram illustrating Application Example 4 of the hierarchical structure. FIG. 47 illustrates an example in which an element corresponding to an attribute of "color" is added to each element in the first hierarchy as an example of the attribute of the merchandise. As illustrated in FIG. 47, the hierarchical structure according to Application Example 4 includes a first hierarchy, a second hierarchy, and a third hierarchy. Among these hierarchies, elements such as "fruit" and "fish" are included as an example of the large classification of the merchandise in the first hierarchy. Elements such as "green grape" and "purple grape" are included as examples of colors of merchandises in the second hierarchy. In the third hierarchy, "Shine Muscat" is included as an example of the merchandise item belonging to the element "green grape" in the second hierarchy, and "premium Kyoho grape A" and "premium Kyoho grape B" are included as examples of the merchandise items belonging to the element "purple grape" in the second hierarchy.

As described above, elements such as "color" and "shape" are added to the template as an example of the attribute of the merchandise, and thus, the accuracy of embedding the text of the class caption of the zero-shot image classifier in the feature space may be improved.

### <5-5. Application Example 5>

Although the example in which the hierarchical structure data has been described as an example of the reference source data in which the attribute of the merchandise is associated with each of the plurality of hierarchies in Embodiment 1 described above, an example in which one or a plurality of merchandise candidates are specified by the zero-shot image classifier referring to the hierarchical structure data has been described. Although an example in which the class captions corresponding to the plurality of merchandise candidates disposed in the store at the current point in time among the candidates for a large number of types of merchandises to be replaced are listed in the hierarchical structure data has been described as an example, the hierarchical structure data is not limited thereto.

By way of example only, the hierarchical structure data may be generated for each time based on merchandises delivered to the store at the time. For example, in a case where the replacement of the merchandises in the store is performed every month, the data generation unit 112 may generate hierarchical structure data for each time in the following manner. For example, the hierarchical structure data is generated for each time in a scheme such as the hierarchical structure data related to the arrived merchandise in November 2022, the hierarchical structure data related to the arrived merchandise in December 2022, and the hierarchical structure data related to the arrived merchandise in January 2023. The unauthorized activity detection unit 115 refers to the hierarchical structure data corresponding to a specific time of the merchandise item among the hierarchical structure data stored for each time and inputs the hierarchical structure data to the text encoder of the zero-shot image classifier. Accordingly, the reference source data to be referred to by the zero-shot image classifier may be switched in accordance with the replacement of the merchandise in the store. As a result, even in a case where the life cycle of the merchandise in the store is short, the stabilization of the accuracy of specifying the merchandise item before and after the replacement of the merchandise may be implemented.

### <5-6. Numerical value>

The number of self-checkouts and cameras, the numerical value examples, the training data examples, the number of pieces of training data, the machine learning models, each class name, the number of classes, the data format, and the like used in the above-described embodiment are by way of example only, and may be arbitrarily changed. A flow of processing described in each flowchart may also be changed as appropriate within the scope without contradiction. A model generated by various algorithms such as a neural network may be adopted as each model.

For the scan position and the position of the shopping basket, the information processing apparatus 100 may use a known technique such as another machine learning model, an object detection technique, or a position detection technique for detecting a position. For example, since the information processing apparatus 100 may detect the position of the shopping basket based on a difference between frames (pieces of image data) and a time-series change in the frames, the information processing apparatus 100 may perform detection by using the position or may generate another model by using the position. A size of the shopping basket is designated in advance, and thus, the information processing apparatus 100 may identify an object having the size as the position of the shopping basket in a case where the object is detected from the image data. Since the scan position is fixed to some extent, the information processing apparatus 100 may identify the position designated by the administrator or the like as the scan position.

### <5-7. System>

The processing procedure, the control procedure, the specific names, and the information including various types of data and parameters that are described above in the document and the drawings may be arbitrarily changed unless otherwise noted.

The specific form of distribution or integration of the elements in devices or apparatuses is not limited to the specific form illustrated in the drawings. For example, the video acquisition unit 113 and the unauthorized activity detection unit 115 may be integrated, or the unauthorized activity detection unit 115 may be distributed to the first detection unit 116 and the second detection unit 117. For example, all or a part of the elements may be functionally or physically distributed or integrated in arbitrary units depending on various types of loads, usage states, or the like. All or arbitrary part of the processing functions of each device or apparatus may be implemented by a CPU and a program analyzed and executed by the CPU or may be implemented as hardware using wired logic.

### <5-8. Hardware>

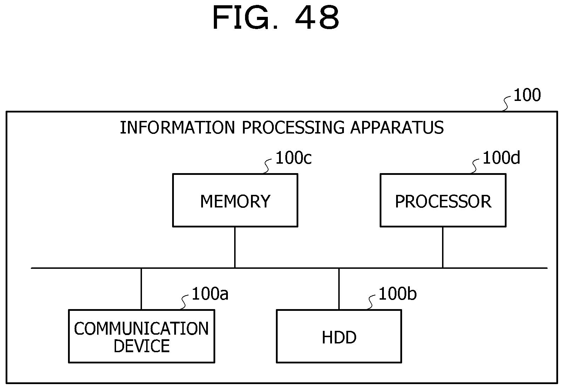

FIG. 48 is a diagram for describing a hardware configuration example of the information processing apparatus. As an example, the information processing apparatus 100 will be described. As illustrated in FIG. 48, the information processing apparatus 100 includes a communication device 100a, a hard disk drive (HDD) 100b, a memory 100c, and a processor 100d. The devices illustrated in FIG. 48 are coupled to each other through a bus or the like.

The communication device 100a is a network interface card or the like and communicates with other apparatuses. The HDD 100b stores the DB and the program for operating the functions illustrated in FIG. 2.

The processor 100d operates a process of executing each function described with reference to FIG. 2 and the like by reading, from the HDD 100b or the like, a program for executing processing similar to the processing of each processing unit illustrated in FIG. 2 and loading the program into the memory 100c. For example, this process executes functions similar to the functions of each processing unit included in the information processing apparatus 100. For example, the processor 100d reads, from the HDD 100b or the like, a program having functions similar to the functions of the machine learning unit 111, the data generation unit 112, the video acquisition unit 113, the self-checkout data acquisition unit 114, the unauthorized activity detection unit 115, the alert generation unit 118, and the like. The processor 100d executes a process of executing processing similar to the processing of the machine learning unit 111, the data generation unit 112, the video acquisition unit 113, the self-checkout data acquisition unit 114, the unauthorized activity detection unit 115, the alert generation unit 118, and the like.

As described above, the information processing apparatus 100 operates as an information processing apparatus that executes an information processing method by reading and executing the program. The information processing apparatus 100 may also implement functions similar to the functions of the above-described embodiments by reading the above-described program from a recording medium with a medium reading device and executing the read program described above. The program described in another embodiment is not limited to being executed by the information processing apparatus 100. For example, the above-described embodiments may be similarly applied to a case where another computer or server executes the program and a case where the computer and the server cooperate with each other to execute the program.

The program may be distributed via a network such as the Internet. The program may be recorded in a computer-readable recording medium such as a hard disk, a flexible disk (FD), a compact disc read-only memory (CD-ROM), a magneto-optical (MO) disk, or a Digital Versatile Disc (DVD), and may be executed by being read from the recording medium by the computer.

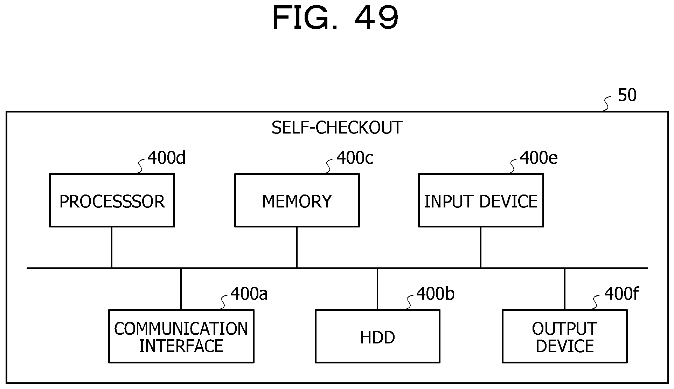

Next, the self-checkout 50 will be described. FIG. 49 is a diagram for describing a hardware configuration example of the self-checkout 50. As illustrated in FIG. 49, the self-checkout 50 includes a communication interface 400a, a HDD 400b, a memory 400c, a processor 400d, an input device 400e, and an output device 400f. The devices illustrated in FIG. 49 are coupled to each other by a bus or the like.

The communication interface 400a is a network interface card or the like and communicates with another information processing apparatus. A program and data for operating each function of the self-checkout 50 are stored in the HDD 400b.

The processor 400d is a hardware circuit that operates a process that executes each function of the self-checkout 50 by reading a program that executes processing of each function of the self-checkout 50 from the HDD 400b or the like and loading the program into the memory 400c. For example, this process executes the functions similar to the functions of each processing unit included in the self-checkout 50.

As described above, the self-checkout 50 operates as an information processing apparatus that executes operation control processing by reading and executing a program that executes processing of each function of the self-checkout 50. The self-checkout 50 may also implement each function of the self-checkout 50 by reading the program from the recording medium by the medium reading device and executing the read program. The program described in another embodiment is not limited to being executed by the self-checkout 50. For example, the present embodiment may be similarly applied to a case where another computer or server executes the program and a case where the computer and the server cooperate with each other to execute the program.

A program that executes the processing of each function of the self-checkout 50 may be distributed via a network such as the Internet. The program may be stored in a computer-readable recording medium such as a hard disk, FD, CD-ROM, MO, or DVD, and may be read from the recording medium and executed by a computer.

The input device 400e detects various input operations by the user such as an input operation to a program executed by the processor 400d. Examples of the input operation include a touch operation and the like. In a case of a touch operation, the self-checkout 50 may further include a display unit, and the input operation detected by the input device 400e may be a touch operation on the display unit. For example, the input device 400e may be a button, a touch panel, a proximity sensor, or the like. The input device 400e reads a barcode. The input device 400e is, for example, a barcode reader. The barcode reader includes a light source and an optical sensor, and scans the barcode.

The output device 400f outputs data output from the program executed by the processor 400d via an external device coupled to the self-checkout 50, for example, an external display device. In a case where the self-checkout 50 includes the display unit, the self-checkout 50 may not include the output device 400f.

## Claims

1. An alert generation program that causes at least one computer to execute a process, the process comprising:
acquiring a video of a person who holds a merchandise to be registered in a checkout machine;
specifying merchandise candidates corresponding to merchandises included in the video and a number of the merchandise candidates by inputting the acquired video to a machine learning model;
acquiring items of merchandises registered by the person and a number of the items of the merchandises; and
generating an alert indicating an abnormality of merchandises registered in the checkout machine based on the acquired items of the merchandises and the number of the items of the merchandises, and the specified merchandise candidates and the number of the merchandise candidates.

2. The alert generation program according to claim 1, wherein the specifying includes:
inputting the video to an image encoder included in the machine learning model,
inputting a plurality of texts corresponding to the plurality of merchandise candidates and the number of the merchandise candidates to a text encoder included in the machine learning model, and
specifying the merchandise candidates corresponding to the merchandises included in the video and the number of the merchandise candidates based on a similarity between a vector of the video output by the image encoder and a vector of the texts output by the text encoder.

3. The alert generation program according to claim 2, wherein
the machine learning model refers to reference source data in which an attribute of a merchandise is associated with each of a plurality of hierarchies, and
the specifying includes:
specifying the merchandise candidates and the number of the merchandise candidates by inputting the video to the image encoder,
inputting a text to the text encoder for each of attributes of merchandises in a first hierarchy,
narrowing down attributes corresponding to the merchandises included in the video among the attributes of the merchandises in the first hierarchy based on a similarity between a vector of the video output by the image encoder and a vector of the text output by the text encoder,
inputting the video to the image encoder,
inputting a text to the text encoder for each of numbers of merchandises in a second hierarchy narrowed down from among the attributes of the merchandises in the first hierarchy, and
specifying a number corresponding to the merchandises included in the video among the numbers of the merchandises in the second hierarchy based on a similarity between a vector of the video output by the image encoder and a vector of the text output by the text encoder.

4. The alert generation program according to claim 2, wherein
the machine learning model refers to reference source data in which an attribute of a merchandise is associated with each of a plurality of hierarchies, and
the specifying includes:
specifying the merchandise candidates and the number of the merchandise candidates by inputting the video to the image encoder,
inputting a text to the text encoder for each of numbers of merchandises in a first hierarchy,
narrowing down numbers corresponding to the merchandises included in the video among the numbers of the merchandises in the first hierarchy based on a similarity between a vector of the video output by the image encoder and a vector of the text output by the text encoder,
inputting the video to the image encoder, inputting a text to the text encoder for each of attributes of merchandises in a second hierarchy narrowed down from among the numbers of the merchandises in the first hierarchy, and
specifying attributes corresponding to the merchandises included in the video among the attributes of the merchandises in the second hierarchy based on a similarity between a vector of the video output by the image encoder and a vector of the text output by the text encoder.

5. The alert generation program according to claim 1, wherein
the checkout machine registers items of merchandises selected by the person and numbers of the items of the merchandises from among a list of merchandises output in a display of the checkout machine, and
the acquiring includes acquiring the items of the merchandises and the numbers of the items of the merchandises from the checkout machine.

6. The alert generation program according to claim 1, wherein
the generating includes generating an alert for warning that the specified number of the merchandise candidates and the number of the items of the merchandises acquired from the checkout machine do not coincide.

7. The alert generation program according to claim 1, wherein
the generating includes generating an alert including one selected from a difference of a purchase amount based on the specified number of the merchandise candidates and the number of the items of the merchandises acquired from the checkout machine, and identification information of the checkout machine.

8. An alert generation method for a computer to execute a process comprising:
acquiring a video of a person who holds a merchandise to be registered in a checkout machine;
specifying merchandise candidates corresponding to merchandises included in the video and a number of the merchandise candidates by inputting the acquired video to a machine learning model;
acquiring items of merchandises registered by the person and a number of the items of the merchandises; and
generating an alert indicating an abnormality of merchandises registered in the checkout machine based on the acquired items of the merchandises and the number of the items of the merchandises, and the specified merchandise candidates and the number of the merchandise candidates.

9. The alert generation method according to claim 8, wherein the specifying includes:
inputting the video to an image encoder included in the machine learning model,
inputting a plurality of texts corresponding to the plurality of merchandise candidates and the number of the merchandise candidates to a text encoder included in the machine learning model, and
specifying the merchandise candidates corresponding to the merchandises included in the video and the number of the merchandise candidates based on a similarity between a vector of the video output by the image encoder and a vector of the texts output by the text encoder.

10. The alert generation method according to claim 9, wherein
the machine learning model refers to reference source data in which an attribute of a merchandise is associated with each of a plurality of hierarchies, and
the specifying includes:
specifying the merchandise candidates and the number of the merchandise candidates by inputting the video to the image encoder,
inputting a text to the text encoder for each of attributes of merchandises in a first hierarchy,
narrowing down attributes corresponding to the merchandises included in the video among the attributes of the merchandises in the first hierarchy based on a similarity between a vector of the video output by the image encoder and a vector of the text output by the text encoder,
inputting the video to the image encoder,
inputting a text to the text encoder for each of numbers of merchandises in a second hierarchy narrowed down from among the attributes of the merchandises in the first hierarchy, and
specifying a number corresponding to the merchandises included in the video among the numbers of the merchandises in the second hierarchy based on a similarity between a vector of the video output by the image encoder and a vector of the text output by the text encoder.

11. The alert generation method according to claim 9, wherein
the machine learning model refers to reference source data in which an attribute of a merchandise is associated with each of a plurality of hierarchies, and
the specifying includes:
specifying the merchandise candidates and the number of the merchandise candidates by inputting the video to the image encoder,
inputting a text to the text encoder for each of numbers of merchandises in a first hierarchy,
narrowing down numbers corresponding to the merchandises included in the video among the numbers of the merchandises in the first hierarchy based on a similarity between a vector of the video output by the image encoder and a vector of the text output by the text encoder,
inputting the video to the image encoder, inputting a text to the text encoder for each of attributes of merchandises in a second hierarchy narrowed down from among the numbers of the merchandises in the first hierarchy, and
specifying attributes corresponding to the merchandises included in the video among the attributes of the merchandises in the second hierarchy based on a similarity between a vector of the video output by the image encoder and a vector of the text output by the text encoder.

12. The alert generation method according to claim 8, wherein
the checkout machine registers items of merchandises selected by the person and numbers of the items of the merchandises from among a list of merchandises output in a display of the checkout machine, and
the acquiring includes acquiring the items of the merchandises and the numbers of the items of the merchandises from the checkout machine.

13. The alert generation method according to claim 8, wherein
the generating includes generating an alert for warning that the specified number of the merchandise candidates and the number of the items of the merchandises acquired from the checkout machine do not coincide.

14. The alert generation method according to claim 8, wherein
the generating includes generating an alert including one selected from a difference of a purchase amount based on the specified number of the merchandise candidates and the number of the items of the merchandises acquired from the checkout machine, and identification information of the checkout machine.

15. An information processing apparatus comprising:
a control unit configured to:
acquire a video of a person who holds a merchandise to be registered in a checkout machine,
specify merchandise candidates corresponding to merchandises included in the video and a number of the merchandise candidates by inputting the acquired video to a machine learning model,
acquire items of merchandises registered by the person and a number of the items of the merchandises, and
generate an alert indicating an abnormality of merchandises registered in the checkout machine based on the acquired items of the merchandises and the number of the items of the merchandises, and the specified merchandise candidates and the number of the merchandise candidates.
